# EUROPEAN PATENT APPLICATION

(11) **EP 3 192 579 A1**
(43) Date of publication of application: **19.07.2017**
(21) Application number: 15840747.8
(22) Date of filing: 08.09.2015
(51) Int. Cl.: B01D 39/20, B01D 46/00, F01N 3/022

(54) **HONEYCOMB SINTERED BODY AND HONEYCOMB FILTER**

(30) Priority: 08.09.2014 JP 2014182458
(71) Applicant: Ibiden Co., Ltd, Ogaki-shi, Gifu 503-8604 (JP)
(72) Inventor: NAGATSU Yuichi, Ibi-gun Gifu 501-0695 (JP)
(74) Representative: Hoefer & Partner Patentanwälte mbB
(86) International application number: PCT/JP2015/075438
(87) International publication number: WO 2016/039325

(57) **Abstract**

Provided is a honeycomb fired body and a honeycomb filter including the honeycomb fired body in which the pressure loss in the initial state where PM has not accumulated is sufficiently low, the strength is sufficiently high, and the heat capacity is not small. The honeycomb fired body of the present invention includes a plurality of cells that serve as channels of exhaust gas; porous cell partition walls defining the cells; and an outer wall formed at a periphery thereof, the cells including exhaust gas introduction cells in each of which an end on an exhaust gas inlet side is open and an end on an exhaust gas outlet side is plugged, and exhaust gas emission cells in each of which an end on the exhaust gas outlet side is open and an end at the exhaust gas inlet side is plugged, wherein the cross-sectional shape of the exhaust gas introduction cells in a plane perpendicular to the longitudinal direction thereof is constant from the end on the exhaust gas inlet side to the end on the exhaust gas outlet side except for the plugged portion, the cross-sectional shape of the exhaust gas emission cells in a plane perpendicular to the longitudinal direction thereof is constant from the end on the exhaust gas inlet side to the end on the exhaust gas outlet side except for the plugged portion, the exhaust gas emission cells except for the cells adjacent to the outer wall are each adjacently surrounded fully by the exhaust gas introduction cells across the cell partition walls, the exhaust gas introduction cells and the exhaust gas emission cells are alternately arranged in a region adjacent to the outer wall, the cross-sectional area of each exhaust gas emission cell located in the region adjacent to the outer wall in a plane perpendicular to the longitudinal direction thereof is larger than the cross-sectional area of each exhaust gas introduction cell located in the region adjacent to the outer wall in a plane perpendicular to the longitudinal direction thereof, and the cell partition walls in contact with the outer wall each have a thick wall region where the wall thickness gradually increases toward the outer wall.

## Description

### TECHNICAL FIELD

The present invention relates to a honeycomb fired body and a honeycomb filter.

### BACKGROUND ART

Particulates (hereinafter also referred to as PM or soot) such as soot in exhaust gas emitted from internal combustion engines including diesel engines cause damage to the environment and human bodies, which has been a problem. Since exhaust gas contains toxic gas components such as CO, HC, and NOx, there has also been a concern for the influences of the toxic gas components on the environment and human bodies.

Thus, various filters having honeycomb structures (honeycomb filters) formed of porous ceramic such as cordierite and silicon carbide (SiC) have been proposed as exhaust gas purifying apparatuses. Such honeycomb filters are connected to internal combustion engines to capture PM in exhaust gas, or to purify toxic gas components such as CO, HC, and NOx in the exhaust gas.

In addition, in order to improve fuel economy of internal combustion engines and to eliminate problems during driving attributed to the increase in pressure loss, there is a demand for a honeycomb filter in which the initial pressure loss is low or a honeycomb filter in which the increase rate of pressure loss after the accumulation of a certain amount of PM is low.

Increasing the aperture ratio is an effective means to reduce the pressure loss. Yet, increasing the aperture ratio entails a decrease in the thickness of cell partition walls. This makes it difficult to ensure the strength of the honeycomb fired body.

In the honeycomb fired body, maintaining the pressure loss at a low level and ensuring the strength are conflicting properties that are difficult to obtain simultaneously.

To solve the above problems, Patent Literature 1 and Patent Literature 2 each disclose a honeycomb filter with an improved cell structure.

Patent Literature 1 discloses a honeycomb structured body formed by combining a plurality of porous ceramic members with one another with an adhesive layer therebetween. Each porous ceramic member includes cells longitudinally arranged in parallel across cell partition walls, and an outer wall at the periphery of the porous ceramic member. The outer wall of the porous ceramic member is thicker than the cell partition walls. At least one cell located at the outermost periphery of the porous ceramic member is provided with a filling material at at least one corner of the cell to fill the corner.

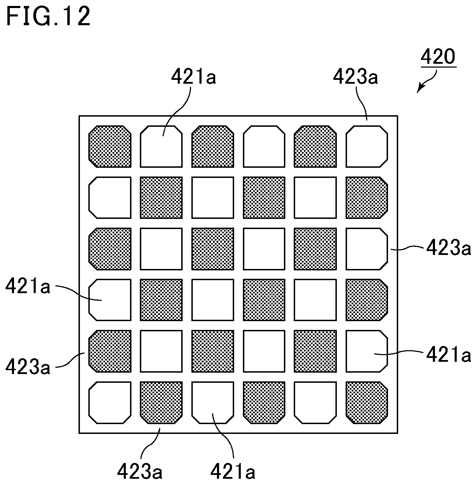

Fig. 12 is a cross-sectional view of the porous ceramic member constituting the honeycomb structured body disclosed in Patent Literature 1 in a plane perpendicular to the longitudinal direction of the porous ceramic member. In this cross section, each square cell 421a, which is located at the outermost periphery and is partitioned by the cell partition walls extending perpendicular to an outer wall 423a of a porous ceramic member 420, is provided with a filling material in the form of a right-angled triangle at at least one corner of the cell 421a.

In Patent Literature 1, owing to the cell structure described above, a high aperture ratio is obtained to maintain the pressure loss at a low level while the strength of the porous ceramic member is ensured, thus preventing the occurrence of damage such as cracking.

Patent Literature 2 discloses a honeycomb filter formed by combining a plurality of honeycomb fired bodies with one another with an adhesive layer therebetween, each honeycomb fired body including a plurality of cells that serve as channels of exhaust gas; porous cell partition walls defining the cells; and an outer wall formed at a periphery thereof, the cells including exhaust gas introduction cells in each of which an end on an exhaust gas inlet side is open and an end on an exhaust gas outlet side is plugged, and exhaust gas emission cells in each of which an end on the exhaust gas outlet side is open and an end at the exhaust gas inlet side is plugged, wherein the cross-sectional shape of the exhaust gas introduction cells in a plane perpendicular to the longitudinal direction thereof is constant from the end on the exhaust gas inlet side to the end on the exhaust gas outlet side of each cell except for the plugged portions, the cross-sectional shape of the exhaust gas emission cells in a plane perpendicular to the longitudinal direction thereof is constant from the end on the exhaust gas inlet side to the end on the exhaust gas outlet side of each cell except for the plugged portions, the exhaust gas emission cells are each adjacently surrounded fully by the exhaust gas introduction cells across the porous cell partition walls, and all the cells adjacent to the outer wall are the exhaust gas introduction cells.

Fig. 13 is a view of an end face of the honeycomb filter disclosed in Patent Literature 2. On the end face of a honeycomb filter 510, exhaust gas emission cells 511 are each fully surrounded by exhaust gas introduction cells 512 and 514 across porous cell partition walls 513, and the cells adjacent to an outer wall 517 consist of first exhaust gas introduction cells 512A and second exhaust gas introduction cells 514A and 514B.

In Patent Literature 2, with the cell structure described above, exhaust gas flows uniformly from the first exhaust gas introduction cells 512 and 512A and the second exhaust gas introduction cells 514, 514A, and 514B to the exhaust gas emission cells 511. Thus, the outflow resistance upon flowing of exhaust gas out of the honeycomb filter is reduced, resulting in low pressure loss.

### CITATION LIST

### Patent Literatures

Patent Literature 1: WO 2007/058006
Patent Literature 2: WO 2013/187442

### SUMMARY OF INVENTION

### - Technical Problem

Gasoline engines are advantageous in that the exhaust gas temperature is high and the emission of PM is small, as compared to diesel engines.

On the downside, gasoline engines have poor fuel economy, as compared to diesel engines. Thus, for purification of exhaust gas emitted from gasoline engines, filters for purifying exhaust gas are required to be low-pressure-loss filters. In addition, when the filter temperature is excessively high, the mechanical strength is reduced and the filters become easily breakable. Thus, the filters need to have sufficient heat capacity to prevent an excessive increase in the filter temperature.

When the honeycomb structured body disclosed in Patent Literature 1 is used in an environment as in a gasoline engine in which the exhaust gas temperature is high and the emission PM is small, it is difficult to sufficiently reduce the pressure loss in the initial state where PM has not accumulated. The initial pressure loss may be reduced by making the cell partition walls thinner; however, when the cell partition walls are made thinner, the porous ceramic member (honeycomb fired body) presumably has a low strength and is susceptible to breakage. In addition, presumably, the thinner cell partition walls result in a smaller heat capacity, and the temperature of the porous ceramic member (honeycomb fired body) is thus likely to be higher than required when exhaust gas flows thereinto. When the temperature of the porous ceramic member (honeycomb fired body) is higher than required, the porous ceramic member (honeycomb fired body) may be broken by its own heat or the catalyst carried thereon may be deactivated.

In the honeycomb filter disclosed in Patent Literature 2, the pressure loss is low; however, in the case where the honeycomb filter disclosed in Patent Literature 2 is used for a gasoline engine, the pressure loss is not considered to be sufficiently low. To further reduce the pressure loss, the cell partition walls may be made thinner; however, the same problem may occur as in Patent Literature 1 in which the cell partition walls of the honeycomb filter of are made thin. Moreover, there was room to improve the arrangement of the exhaust gas emission cells and the exhaust gas introduction cells.

In other words, the honeycomb filters disclosed in Patent Literature 1 and Patent Literature 2 are not considered to have sufficient properties as a honeycomb filter for gasoline engines.

The present invention was made in view of the above problems. An object of the present invention is to provide a honeycomb fired body in which the pressure loss in the initial state where PM has not accumulated is sufficiently low, the strength is sufficiently high, and the heat capacity is not small; and a honeycomb filter including the honeycomb fired body.

### - Solution to Problem

As a result of repeated intensive studies to solve the above problems, the present inventors produced a honeycomb fired body in which exhaust gas emission cells are each fully surrounded by exhaust gas introduction cells across cell partition walls, the exhaust gas emission cells and the exhaust gas introduction cells are alternately arranged at an outermost peripheral region of the honeycomb fired body, and cells located at the outermost peripheral region of the honeycomb fired body are formed in a predetermined shape. They found that in the above honeycomb fired body, the pressure loss in the initial state where PM has not accumulated can be made sufficiently low, the strength can be made sufficiently high, and the heat capacity is not small. Thus, the present invention was completed.

Specifically, the honeycomb fired body of the present invention includes a plurality of cells that serve as channels of exhaust gas; porous cell partition walls defining the cells; and an outer wall formed at a periphery thereof, the cells including exhaust gas introduction cells in each of which an end on an exhaust gas inlet side is open and an end on an exhaust gas outlet side is plugged, and exhaust gas emission cells in each of which an end on the exhaust gas outlet side is open and an end at the exhaust gas inlet side is plugged, wherein the cross-sectional shape of the exhaust gas introduction cells in a plane perpendicular to the longitudinal direction thereof is constant from the end on the exhaust gas inlet side to the end on the exhaust gas outlet side except for the plugged portion, the cross-sectional shape of the exhaust gas emission cells in a plane perpendicular to the longitudinal direction thereof is constant from the end on the exhaust gas inlet side to the end on the exhaust gas outlet side except for the plugged portion, the exhaust gas emission cells except for the cells adjacent to the outer wall are each adjacently surrounded fully by the exhaust gas introduction cells across the cell partition walls, the exhaust gas introduction cells and the exhaust gas emission cells are alternately arranged in a region adjacent to the outer wall, the cross-sectional area of each exhaust gas emission cell located in the region adjacent to the outer wall in a plane perpendicular to the longitudinal direction thereof is larger than the cross-sectional area of each exhaust gas introduction cell located in the region adjacent to the outer wall in a plane perpendicular to the longitudinal direction thereof, and the cell partition walls in contact with the outer wall each have a thick wall region where the wall thickness gradually increases toward the outer wall.

In the honeycomb fired body of the present invention, the exhaust gas emission cells except for the cells adjacent to the outer wall are each adjacently surrounded fully by the exhaust gas introduction cells across the cell partition walls.

With the above structure, the entire cell partition walls surrounding the exhaust gas emission cells can be sufficiently utilized for the passage of exhaust gas therethrough flowing from the exhaust gas introduction cells and for the accumulation of PM thereon. In other words, the entire cell partition walls can be widely utilized. This facilitates thin and uniform accumulation of PM on the inner surface of the cell partition walls of the exhaust gas introduction cells, leading to a low passage resistance of a PM layer. Thus, it is possible to provide a honeycomb fired body in which the initial pressure loss is low and the increase in pressure loss is suppressed even after the accumulation of PM.

In the honeycomb fired body of the present invention, the exhaust gas introduction cells and the exhaust gas emission cells are alternately arranged in a region adjacent to the outer wall, and the cross-sectional area of each exhaust gas emission cell located in the region adjacent to the outer wall in a plane perpendicular to the longitudinal direction thereof is larger than the cross-sectional area of each exhaust gas introduction cell located in the region adjacent to the outer wall in a plane perpendicular to the longitudinal direction thereof.

In the honeycomb fired body having the above structure, with regard to the cells adjacent to the outer wall, the cross-sectional area of each exhaust gas emission cell in a plane perpendicular to the longitudinal direction thereof is larger than the cross-sectional area of each exhaust gas introduction cell in a plane perpendicular to the longitudinal direction thereof. Thus, the outflow resistance upon flowing of exhaust gas out of the honeycomb fired body can be reduced. Further, exhaust gas can pass through not only the cell partition walls defining the exhaust gas introduction cells adjacent to the outer wall but also the outer wall defining the exhaust gas introduction cells. Thus, at the outermost peripheral region of the honeycomb fired body of the present invention, the entire cell partition walls can be completely utilized to purify exhaust gas, and the outer wall can also be utilized. This facilitates thin and uniform accumulation of PM on the surface of the cell partition walls of the exhaust gas introduction cells and the surface of the outer wall, so that the passage resistance upon passage of exhaust gas through PM accumulation layers can be reduced. Thus, a honeycomb fired body can be provided in which the initial pressure loss is low and the increase in pressure loss is suppressed even after the accumulation of PM.

In the honeycomb fired body of the present invention, the cell partition walls in contact with the outer wall each have a thick wall region where the wall thickness gradually increases toward the outer wall.

In the honeycomb fired body having the above structure, the volume of the outermost peripheral region of the honeycomb fired body is large.

Since the volume of the outermost peripheral region is sufficiently large, the honeycomb fired body is sufficiently strong against external shock or the like. In addition, since the volume of the outermost peripheral region of the honeycomb fired body is large, the heat capacity is not small in the honeycomb fired body of the present invention. Thus, even if the honeycomb fired body of the present invention is heated rapidly, the outer wall can absorb heat and suppress cracks.

This can also be explained as follows.

The honeycomb fired body is cut out in a predetermined range from a region containing a portion where the base of the honeycomb fired body is present and a spatial portion of a cell where no base is present, and the weight of the honeycomb fired body in the predetermined range is divided by the volume of the honeycomb fired body in the predetermined range to determine the "apparent density". In the honeycomb fired body of the present invention, the outermost peripheral region of the honeycomb fired body has a higher apparent density than the inner portion of the honeycomb fired body.

Thus, in the honeycomb fired body of the present invention, the heat capacity of the outermost peripheral region of the honeycomb fired body is larger. Therefore, the outermost peripheral region can absorb heat even if heat is applied rapidly to the honeycomb fired body from the outside and thus can prevent cracks.

In addition, when the "apparent density" of the outermost peripheral region of the honeycomb fired body is high, the outer frame is mechanically robust and the honeycomb fired body is thus sufficiently strong against external shock or the like.

In the honeycomb fired body of the present invention, preferably, the exhaust gas introduction cells include first exhaust gas introduction cells not adjacent to the outer wall and second exhaust gas introduction cells not adjacent to the outer wall and third exhaust gas introduction cells adjacent to the outer wall, the cross-sectional area of each first exhaust gas introduction cell in a plane perpendicular to the longitudinal direction thereof is smaller than the cross-sectional area of each second exhaust gas introduction cell in a plane perpendicular to the longitudinal direction thereof, the exhaust gas emission cells include first exhaust gas emission cells not adjacent to the outer wall and second exhaust gas emission cells adjacent to the outer wall, the cross-sectional area of each first exhaust gas emission cell in a plane perpendicular to the longitudinal direction thereof is equal to or larger than the cross-sectional area of each second exhaust gas introduction cell in a plane perpendicular to the longitudinal direction thereof, and in a cross section perpendicular to the longitudinal direction of the cells, the exhaust gas emission cells and the exhaust gas introduction cells are each a polygon, and a side forming the cross-sectional shape of the first exhaust gas introduction cells and facing the exhaust gas emission cell is longer than a side forming the cross-sectional shape of the second exhaust gas introduction cells and facing the exhaust gas emission cell.

In the honeycomb fired body having the above structure, each cell partition wall between the first exhaust gas introduction cell and the exhaust gas emission cell has a large passage region (in the case of the cross-sectional shape of a polygonal cell, the sides are long), and exhaust gas can pass through these cell partition walls that are convenient to pass through, and the passage resistance of the cell partition walls can be reduced. In addition, since the cross-sectional area of each exhaust gas emission cell is larger than the cross-sectional area of each first exhaust gas introduction cell, the flow-through resistance of the exhaust gas emission cells can be reduced. In other words, the passage resistance of the cell partition walls and the flow-through resistance of the exhaust gas emission cells can both be reduced, and the initial pressure loss can be reduced.

Next, after the accumulation of a certain amount of PM, the passage resistance of PM accumulation layers on the first exhaust gas introduction cells becomes high at an early point because the cross-sectional area of each first exhaust gas introduction cell is smaller than that of each second exhaust gas introduction cell. This causes switching of the main flow channel of exhaust gas to allow exhaust gas to naturally (voluntarily) flow more into the second exhaust gas introduction cells than into the first exhaust gas introduction cells, allowing PM to accumulate widely and thinly on the second exhaust gas introduction cells each having a larger cross-sectional area. Thus, even after the accumulation of PM, the flow-through resistance of the exhaust gas introduction cells and the passage resistance upon passage of exhaust gas through the PM accumulation layers can be reduced, and the transient pressure loss can be reduced.

In the honeycomb fired body of the present invention, preferably, the cross-sectional shape of the first exhaust gas emission cells in a plane perpendicular to the longitudinal direction thereof is an octagon, the cross-sectional shape of the first exhaust gas introduction cells in a plane perpendicular to the longitudinal direction thereof is a square, and the cross-sectional shape of the second exhaust gas introduction cells in a plane perpendicular to the longitudinal direction thereof is an octagon.

In the honeycomb fired body having the above structure, the initial pressure loss can be effectively suppressed and the surface area where PM accumulates can be increased. Thus, the pressure loss can be maintained at a low level.

In the honeycomb fired body of the present invention, preferably, the cross-sectional shape of the second exhaust gas emission cells in a plane perpendicular to the longitudinal direction thereof is a shape formed by cutting a portion of the octagonal cross-sectional shape of the first exhaust gas emission cells in a plane perpendicular to the longitudinal direction by a straight line so as to form a hexagon and then chamfering or rounding two corners adjacent to the outer wall among the corners of the hexagon.

In the honeycomb fired body having the above structure, it is possible to increase the volume of the region around the outer wall to which the exhaust gas emission cells are adjacent, and it is possible to further increase the volume of the outermost peripheral region of the honeycomb fired body. Thus, it is possible to enhance the above-described effect that is achieved when the volume of the outermost peripheral region of the honeycomb fired body is large.

As used herein, the "shape formed by chamfering or rounding corners" refers to the shape formed by cutting corners by straight lines or curves.

In the honeycomb fired body of the present invention, the cross-sectional shape of the third exhaust gas introduction cells in a plane perpendicular to the longitudinal direction thereof may be a square congruent to the cross-sectional shape of the first exhaust gas introduction cells in a plane perpendicular to the longitudinal direction thereof.

In the honeycomb fired body having the above structure, it is possible to increase the surface area of each exhaust gas introduction cell adjacent to the outer wall. This results in an increase in the area where PM accumulates, and the pressure loss thus can be maintained at a low level.

In the honeycomb fired body of the present invention, the cross-sectional shape of the third exhaust gas introduction cells in a plane perpendicular to the longitudinal direction thereof may be a shape formed by chamfering or rounding two corners adjacent to the outer wall among the corners of the square cross-sectional shape of the first exhaust gas introduction cells in a plane perpendicular to the longitudinal direction thereof.

In the honeycomb fired body having the above structure, it is possible to increase the volume of the region around the outer wall to which the third exhaust gas introduction cells are adjacent, and it is possible to further increase the volume of the outermost peripheral region of the honeycomb fired body. Thus, it is possible to enhance the above-described effect that is achieved when the volume of the outermost peripheral region of the honeycomb fired body is large.

The honeycomb fired body of the present invention is preferably formed of SiC.

SiC is a material having excellent heat resistance. The honeycomb fired body formed of SiC has excellent heat resistance.

In the honeycomb fired body of the present invention, preferably, the thickness of the cell partition walls is 0.210 mm or less.

Owing to the cell structure described above, the pressure loss is low in the honeycomb fired body of the present invention. Further, the cell partition walls having a thickness in the above range are sufficiently thin so that the pressure loss in the initial state where PM has not accumulated is further reduced. The increase in pressure loss after the accumulation of PM can also be sufficiently suppressed.

The cell partition walls having a thickness of more than 0.210 mm are so thick that the resistance upon passage of exhaust gas through the cell partition walls is high, interfering with the reduction of the pressure loss.

In the honeycomb fired body of the present invention, preferably, the minimum thickness of the outer wall is 1.5 to 3 times the thickness of the cell partition walls.

The outer wall having a minimum thickness that is 1.5 to 3 times the thickness of the cell partition walls is sufficiently thick so that the honeycomb fired body is sufficiently strong against external shock or the like. In addition, since the outer wall of the honeycomb fired body is thick, the heat capacity is not small.

The honeycomb filter of the present invention includes a plurality of honeycomb fired bodies of the present invention; and an adhesive layer combining the plurality of the honeycomb fired bodies with one another.

The honeycomb filter of the present invention includes the honeycomb fired bodies of the present invention providing the above effects, so that in the honeycomb filter of the present invention, the pressure loss in the initial state where PM has not accumulated is sufficiently low, the strength is sufficiently high, and the heat capacity is not small.

The honeycomb filter of the present invention is preferably for use in purifying exhaust gas from gasoline engines.

As described above, in the honeycomb filter of the present invention, the pressure loss in the initial state where PM has not accumulated is sufficiently low, the strength is sufficiently high, and the heat capacity is not small. Thus, the honeycomb filter of the present invention can be suitably used to purify exhaust gas from gasoline engines.

### BRIEF DESCRIPTION OF DRAWINGS

Fig. 1(a) is a schematic view of purification of exhaust gas by a common honeycomb fired body. Fig. 1(b) is a schematic view of pressure loss resulting from purification of exhaust gas by a common honeycomb fired body, and it is an enlarged view of the region indicated by dashed lines in Fig. 1(a).
Fig. 2 is a schematic perspective view of an example of a honeycomb fired body of the present invention.
Fig. 3(a) is a schematic cross-sectional view of an example of the cross section of the honeycomb fired body of the present invention in a plane perpendicular to the longitudinal direction thereof, which is shown in Fig. 2. Fig. 3(b) is an enlarged view of the region indicated by dashed lines in Fig. 3(a).
Figs. 4(a) to 4(e) are each a schematic cross-sectional view of an example of the cross-sectional shape of a second exhaust gas emission cell of the honeycomb fired body of the present invention in a plane perpendicular to the longitudinal direction thereof.
Figs. 5(a) and 5(b) are each a schematic cross-sectional view of an example of the cross-sectional shape of exhaust gas emission corner cells of the honeycomb fired body of the present invention in a plane perpendicular to the longitudinal direction thereof.
Figs. 6(a) to 6(f) are each a schematic cross-sectional view of an example of the cross-sectional shape of third exhaust gas introduction cells of the honeycomb fired body of the present invention in a plane perpendicular to the longitudinal direction thereof.
Fig. 7 is a schematic view of the flow of exhaust gas in a cross section of the honeycomb fired body of the present invention in a plane perpendicular to the longitudinal direction thereof, which is shown in Fig. 3(a).
Figs. 8(a) to 8(c) are each an enlarged end face view of an example of a portion of an end face of the honeycomb fired body of the present invention.
Fig. 9 is a schematic perspective view of an example of the honeycomb filter of the present invention.
Fig. 10 is a schematic cross-sectional view of an example of an exhaust gas purification device including the honeycomb filter of the present invention.
Fig. 11 is a schematic explanatory view of an initial pressure loss measuring device.
Fig. 12 is a cross-sectional view of a porous ceramic member constituting the honeycomb structured body disclosed in Patent Literature 1 in a plane perpendicular to the longitudinal direction thereof.

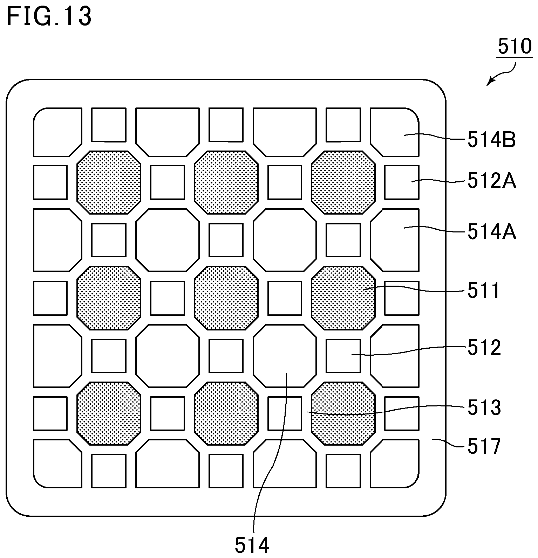

Fig. 13 is a view of an end face of the honeycomb filter disclosed in Patent Literature 2.

### DESCRIPTION OF EMBODIMENTS

The honeycomb fired body and the honeycomb filter of the present invention are described in details below. However, the present invention is not limited to the following description and may be appropriately modified within the scope not departing from the gist of the present invention.

Before describing the honeycomb fired body of the present invention, purification of exhaust gas by a common honeycomb fired body and pressure loss resulting therefrom are explained with reference to the drawings.

First, purification of exhaust gas by a common honeycomb fired body is explained.

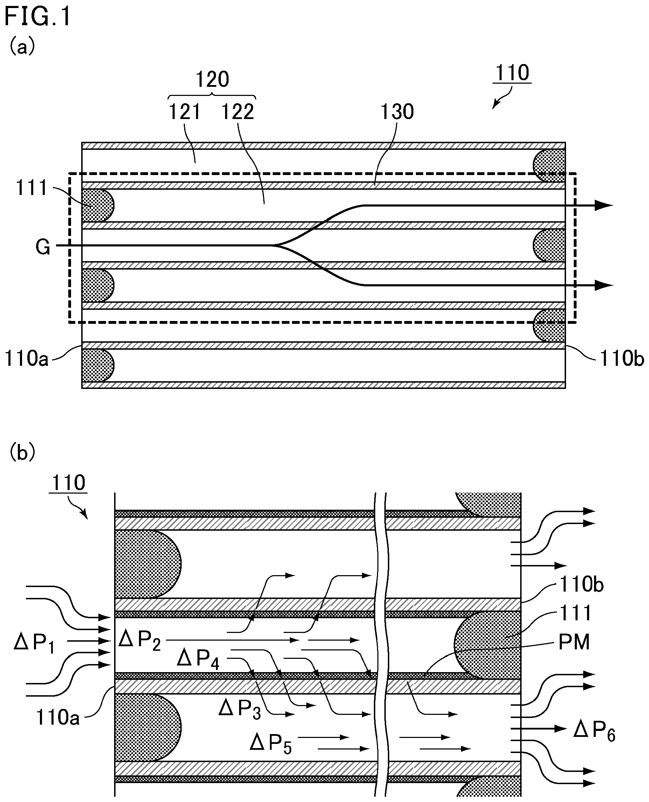

Fig. 1(a) is a schematic view of purification of exhaust gas by a common honeycomb fired body.

A common honeycomb fired body 110 shown in Fig. 1(a) includes a plurality of cells 120 in each of which an end is plugged with a plug 111 and which serve as channels of exhaust gas and porous cell partition walls 130 defining the cells. The cells 120 include exhaust gas introduction cells 121 into which exhaust gas flows and exhaust gas emission cells 122 from which exhaust gas is emitted. Exhaust gas emitted from an internal combustion engine flows into the honeycomb fired body 110 (in Fig. 1(a), exhaust gas is indicated by G, and the flow of the exhaust gas is indicated by arrows) and enters the exhaust gas introduction cells 121 each having an open end at an exhaust gas inlet side end face 110a of the honeycomb fired body 110 and passes through the cell partition walls 130 separating the cells 120 from each other. At this point, PM in exhaust gas is captured by the cell partition walls 130, whereby the exhaust gas is purified. The purified exhaust gas flows out from the exhaust gas emission cells 122 each having an open end at an exhaust gas outlet side end face 110b and is emitted to the outside.

Next, the pressure loss resulting from purification of exhaust gas by a common honeycomb fired body is explained.

Fig. 1(b) is a schematic view of pressure loss resulting from purification of exhaust gas by a common honeycomb fired body, and it is an enlarged view of the region indicated by dashed lines in Fig. 1(a).

As shown in Fig. 1(b), presumably, the pressure loss occurs due to the following factors (a) to (e): (a) inflow resistance ΔP₁ upon flowing of exhaust gas into the honeycomb fired body 110, (b) flow-through resistance ΔP₂ of the exhaust gas introduction cells 121, (c) passage resistance ΔP₃ of the cell partition walls 130, (d) passage resistance ΔP₄ upon passage of exhaust gas through PM accumulation layers, (e) flow-through resistance ΔP₅ of the exhaust gas emission cells 122, and (f) outflow resistance ΔP₆ upon flowing of exhaust gas out of the honeycomb fired body 110.

The present inventors have found that the major factors of the initial pressure loss before the accumulation of PM are (c), (e), and (f), and the major factors of the transient pressure loss that occurs after the accumulation of a certain amount of PM are (a), (b), and (d).

Especially when the honeycomb fired body 110 is configured such that the aperture ratio of the honeycomb fired body 110 based on the exhaust gas emission cells 122 is lower than the aperture ratio of the honeycomb fired body 110 based on the exhaust gas introduction cells 121, (e) the flow-through resistance ΔP₅ of the exhaust gas emission cells 122 exerts strong influence as the major factor of the initial pressure loss.

The major factor of the initial pressure loss is considered to be (f) the outflow resistance ΔP₆ upon flowing of exhaust gas out of the honeycomb fired body 110, not (a) the inflow resistance ΔP₁ upon flowing of exhaust gas into the honeycomb fired body 110. The reason for the above is that a vortex is induced near the outlet of the cells when exhaust gas is emitted from the cells and rapidly expanded, and the resistance caused by this vortex as it interferes with the outflow of exhaust gas is presumably higher than the resistance caused by the exhaust gas being compressed.

Next, the honeycomb fired body of the present invention is described.

In the honeycomb fired body of the present invention, the pressure loss in the initial state where PM has not accumulated is sufficiently low, the strength is sufficiently high, and the heat capacity is not small. This is explained below with reference to the drawings.

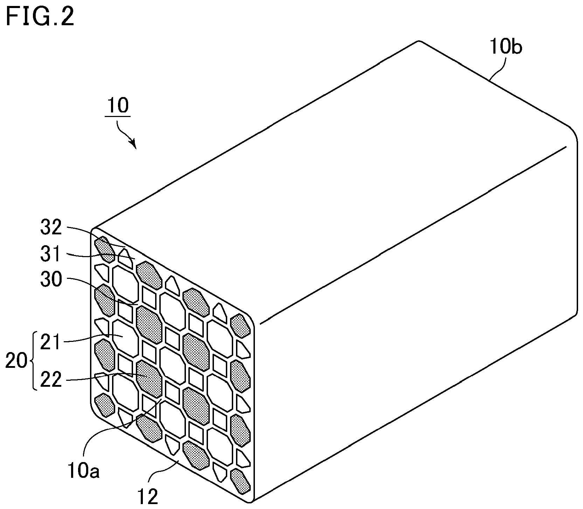

Fig. 2 is a schematic perspective view of an example of the honeycomb fired body of the present invention.

As shown in Fig. 2, a honeycomb fired body 10 as an example of the honeycomb fired body of the present invention includes a plurality of cells 20 that serve as channels of exhaust gas; the porous cell partition walls 30 defining the cells 20; and an outer wall 32 formed at a periphery thereof, the cells 20 including exhaust gas introduction cells 21 in each of which an end 10a on an exhaust gas inlet side is open and an end 10b on an exhaust gas outlet side is plugged, and exhaust gas emission cells 22 in each of which the end 10b on the exhaust gas outlet side is open and the end 10a at the exhaust gas inlet side is plugged.

The cross-sectional shape of the exhaust gas introduction cells 21 in a plane perpendicular to the longitudinal direction thereof is constant from the end 10a on the exhaust gas inlet side to the end 10b on the exhaust gas outlet side excluding a plug 11.

The cross-sectional shape of the exhaust gas emission cells 22 in a plane perpendicular to the longitudinal direction thereof is constant from the end 10a on the exhaust gas inlet side to the end 10b on the exhaust gas outlet side excluding a plug 11.

As shown in Fig. 2, in the honeycomb fired body 10, the cell partition walls 30 in contact with the outer wall 32 has a thick wall region 31 where the wall thickness gradually increases toward the outer wall 32.

In the honeycomb fired body 10 having the above structure, the volume of an outermost peripheral region 12 is large.

Since the volume of the outermost peripheral region 12 is sufficiently large, the honeycomb fired body 10 is sufficiently strong against external shock or the like. In addition, since the volume of the outermost peripheral region 12 of the honeycomb fired body 10 is large, the heat capacity is not small. Thus, even if the honeycomb fired body 10 is heated rapidly, the outer wall 32 can absorb heat and prevent cracks.

The above can also be explained as follows.

The honeycomb fired body 10 is cut out in a predetermined range from a region containing a portion where a base of the honeycomb fired body 10 is present and a spatial portion of a cell where no base is present, and the weight of the honeycomb fired body 10 in the predetermined range is divided by the volume of the honeycomb fired body 10 in the predetermined range to determine the "apparent density". In the honeycomb fired body 10, the outermost peripheral region 12 of the honeycomb fired body 10 has a higher apparent density than the inner portion of the honeycomb fired body 10.

Thus, in the honeycomb fired body 10, the heat capacity is relatively large in the outermost peripheral region 12 of the honeycomb fired body 10. Therefore, the outermost peripheral region 12 can absorb heat even if heat is applied rapidly to the honeycomb fired body from the outside and thus can prevent cracks.

In addition, when the "apparent density" of the outermost peripheral region 12 of the honeycomb fired body 10 is high, the outer frame is mechanically robust and the honeycomb fired body is thus sufficiently strong against external shock or the like.

Next, the shapes of the exhaust gas introduction cells 21 and the exhaust gas emission cells 22 are described in detail with reference to the drawings.

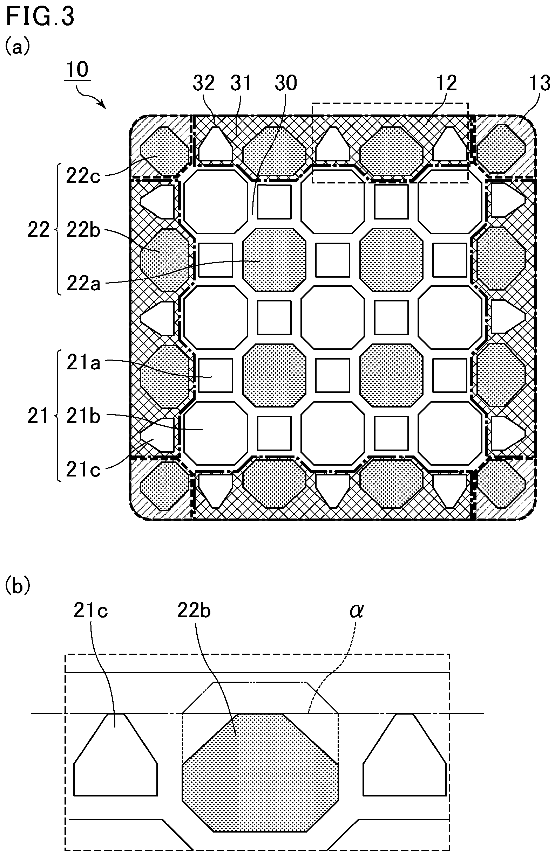

Fig. 3(a) is a schematic cross-sectional view of an example of the cross section of the honeycomb fired body of the present invention in a plane perpendicular to the longitudinal direction thereof, which is shown in Fig. 2. Fig. 3(b) is an enlarged view of the region indicated by dashed lines in Fig. 3(a).

As shown in Fig. 3(a), the exhaust gas introduction cells 21 include first exhaust gas introduction cells 21a not adjacent to the outer wall 32 and second the exhaust gas introduction cells 21b not adjacent to the outer wall 32, and third exhaust gas introduction cells 21c adjacent to the outer wall 32.

In addition, the exhaust gas emission cells 22 include first exhaust gas emission cells 22a not adjacent to the outer wall 32, second exhaust gas emission cells 22b adjacent to the outer wall 32, and exhaust gas emission corner cells 22c each located at a corner 13.

The cross-sectional area of each second exhaust gas emission cell 22b is larger than the cross-sectional area of each third exhaust gas introduction cells 21c.

As used herein, the "second exhaust gas emission cells adjacent to the outer wall" do not include the "exhaust gas emission cells" located at the corners.

The following method can be used to determine the cross-sectional area of each cell 20 in a plane perpendicular to the longitudinal direction thereof.

First, the honeycomb fired body 10 is cut in a plane perpendicular to the longitudinal direction thereof. Next, an SEM image of the cross section of the honeycomb fired body 10 in a plane perpendicular to the longitudinal direction thereof is taken.

The SEM image taken is binarized to identify framework portions such as the cell partition walls 30 and the outer wall 32 and spatial portions such as the cells 20. The area of a portion identified as a spatial portion of each cell in the SEM image is regarded as the area of each cell.

First, the cross-sectional shapes of the cells located in the region not adjacent to the outer wall 32 are described.

In the honeycomb fired body 10, any shape may be employed as long as the first exhaust gas emission cells 22a are each adjacently surrounded fully by the exhaust gas introduction cells 21 across the cell partition walls 30. Yet, for example, the following shapes are preferred.

As shown in Fig. 3(a), the cross-sectional shape of the first exhaust gas emission cells 22a is an octagon, the cross-sectional shape of the first exhaust gas introduction cells 21a is a square, and the cross-sectional shape of the second exhaust gas introduction cells 21b is an octagon.

When the shapes of the cells are as described above, the initial pressure loss can be effectively suppressed and the surface area where PM accumulates can be increased. Thus, the pressure loss can be maintained at a low level. This effect is described later in detail.

When the shapes of the cells are as described above, the cross-sectional shapes of the cells in a plane perpendicular to the longitudinal direction thereof are preferably as follows: the first exhaust gas emission cells 22a are each an octagon in which four short sides with a length of 0.4 to 1.0 mm and four long sides with a length of 1.0 to 1.5 mm are alternately arranged and the degree of the angle formed by the short side and the long side is 120° to 150°; the first exhaust gas introduction cells 21a are each a square with a side length of 1.0 to 1.5 mm; and the second exhaust gas introduction cells 21b are each an octagon in which four short sides with a length of 0.4 to 1.0 mm and four long sides with a length of 1.0 to 1.5 mm are alternately arranged and the degree of the angle formed by the short side and the long side is 120° to 150°.

Next, the cross-sectional shapes of the cells adjacent to the outer wall 32 are described.

In the honeycomb fired body 10, the cross-sectional shapes of the cells located in the region adjacent to the outer wall 32 such as the third exhaust gas introduction cells 21c, the second exhaust gas emission cells 22b, and the exhaust gas emission corner cells 22c are not particularly limited as long as the thick wall region 31 is formed and the cross-sectional area of each second exhaust gas emission cell 22b is larger than the cross-sectional area of each third exhaust gas introduction cell 21c. Yet, the following shapes are preferred.

First, as shown in Fig. 3(a), in a cross section of the honeycomb fired body 10 in a plane perpendicular to the longitudinal direction thereof, except for the cells adjacent to the outer wall 32, the first exhaust gas introduction cells 21a, the second exhaust gas introduction cells 21b, and the first exhaust gas emission cells 22a are arranged in a certain pattern. In this arrangement in a certain pattern, preferably, the cells adjacent to the outer wall 32 each have a shape that is formed by cutting a portion of a cell that is the second closest to the periphery.

Specifically, as shown in Fig. 3(b), in the honeycomb fired body 10, the cross-sectional shape of the second exhaust gas emission cells 22b in a plane perpendicular to the longitudinal direction thereof is preferably a shape formed by cutting a portion of the octagonal cross-sectional shape of the first exhaust gas emission cells 22a in a plane perpendicular to the longitudinal direction by a straight dotted line shown on the inner side of the outer wall 32 at a portion where the outer wall 32 is thinnest so as to form a hexagon α and then chamfering two corners adjacent to the outer wall 32 among the corners of the hexagon α.

In the honeycomb fired body 10 having the above structure, it is possible to increase the volume of the region around the outer wall to which the second exhaust gas emission cells 22b are adjacent, and it is possible to further increase the volume of the outermost peripheral region 12 of the honeycomb fired body 10. Thus, it is possible to enhance the above-described effect that is achieved when the volume of the outermost peripheral region 12 of the honeycomb fired body 10 is large.

As used herein, the "shape formed by chamfering or rounding corners" refers to the shape formed by cutting corners by straight lines or curves.

The shape of the second exhaust gas emission cells 22b is described more specifically, with reference to the drawings.

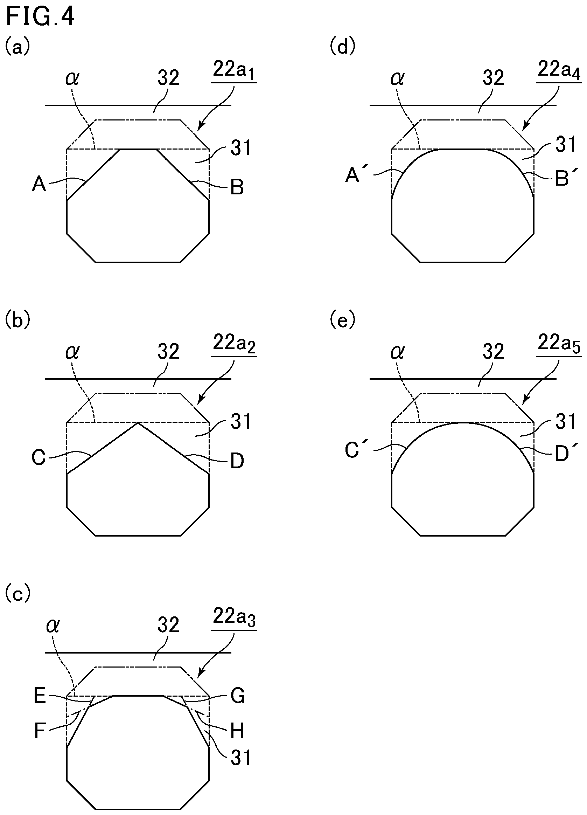

The cross-sectional shape of the second exhaust gas emission cells 22b may be any of the shapes shown in Figs. 4(a) to 4(e).

Figs. 4(a) to 4(e) are each a schematic cross-sectional view of an example of the cross-sectional shape of the second exhaust gas emission cell of the honeycomb fired body of the present invention in a plane perpendicular to the longitudinal direction thereof.

As shown in Fig. 4(a), the cross-sectional shape of a second exhaust gas emission cell 22b₁ is a shape formed by cutting a portion of the octagonal cross-sectional shape (indicated by dashed lines in Fig. 4(a)) of a first exhaust gas emission cell 22a₁ by a straight line so as to form a hexagon α and then chamfering two corners adjacent to the outer wall 32 among the corners of the hexagon α.

Specifically, the cross-sectional shape of the second exhaust gas emission cell 22b₁ shown in Fig. 4(a) is an octagonal shape. In this case, among the corners of the hexagon α, two corners adjacent to the outer wall 32 are cut by two segments A and B, respectively. The segments A and B are not in direct contact with each other. The segments A and B cross each other outside the hexagon α when extended. A line between the two cut-out corners, which is a portion forming one side of the hexagon α, forms one side of the octagon.

As shown in Fig. 4(b), the cross-sectional shape of a second exhaust gas emission cell 22b₂ is a heptagonal shape. In this case, among the corners of the hexagon α, two corners adjacent to the outer wall 32 are cut by two segments C and D, respectively. In addition, the segment C and the segment D are in contact with each other on one side of the hexagon α. The segment C and the segment D may cross each other inside the hexagon α. There is no line as a side of the hexagon α between the two cut-out corners.

As shown in Fig. 4(c), the cross-sectional shape of a second exhaust gas emission cell 22b₃ is a decagonal shape. In this case, among the corners of the hexagon α, one of two corners adjacent to the outer wall 32 is cut by segments E and F, and the other corner is cut by segments G and H. The segment E and segment F cross each other inside the hexagon α. The segment G and the segment H also cross each other inside the hexagon α. A line between the two cut-out corners, which is a portion forming one side of the hexagon α, forms one side of the decagon.

As shown in Fig. 4(d), the cross-sectional shape of a second exhaust gas emission cell 22b₄ is a shape formed by cutting two corners adjacent to the outer wall 32 among the corners of the hexagon α by two curves A' and B', respectively. The curves A' and B' are formed by bending the segments A and B in such a manner that the corners of the hexagon α are rounded. A line between the two cut-out corners, which is a portion forming one side of the hexagon α, forms a portion of the contour of the cross-sectional shape of the second exhaust gas emission cell 22b₄.

As shown in Fig. 4(e), the cross-sectional shape of a second exhaust gas emission cell 22b₅ is a shape formed by cutting two corners adjacent to the outer wall 32 among the corners of the hexagon α by two curves C' and D', respectively. The curves C' and D' are formed by bending the segments C and D in such a manner that the corners of the hexagon α are rounded. The curve C' and the curve D' are in contact with each other on one side of the hexagon α. The curve C' and the curve D' may contact each other inside the hexagon α.

The cross-sectional area of each of the second exhaust gas emission cells 22b₁ to 22b₅ is preferably 60 to 80% of the area of the hexagon α.

Next, the shape of the exhaust gas emission corner cells 22c is described.

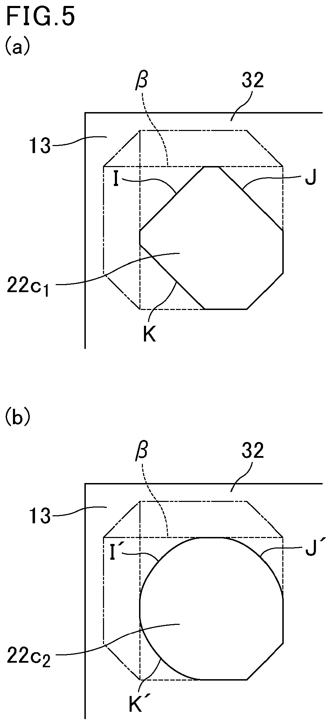

The cross-sectional shape of the exhaust gas emission corner cells 22c may be as shown in Figs. 5(a) and 5(b).

Figs. 5(a) and 5(b) are each a schematic cross-sectional view of an example of the cross-sectional shape of the exhaust gas emission corner cells of the honeycomb fired body of the present invention in a plane perpendicular to the longitudinal direction thereof.

As shown in Fig. 5(a), the cross-sectional shape of an exhaust gas emission corner cell 22c₁ is a shape formed by cutting a portion of the octagonal cross-sectional shape (indicated by dashed lines in Fig. 5(a)) of the first exhaust gas emission cells 22a by two straight lines so as to form a pentagon β and then chamfering three corners adjacent to the outer wall 32 among the corners of the pentagon β. Specifically, the cross-sectional shape of the exhaust gas emission corner cell 22c₁ shown in Fig. 5(a) is an octagonal shape. In this case, among the corners of the pentagon β, three corners adjacent to the outer wall 32 are cut by three segments I, J, and K, respectively. The segments I, J, and K are not in direct contact with each other. The segments I and J cross each other and the segments I and K cross each other outside the pentagon β when extended. In addition, the segment J and the segment K are parallel to each other. Lines between the three cut-out corners, which are portions forming the sides of the pentagon β, form the sides of the octagon.

As shown in Fig. 5(b), the cross-sectional shape of an exhaust gas emission corner cell 22c₂ is a shape formed by cutting three corners adjacent to the outer wall 32 among the corners of the pentagon β by three curves I', J', and K', respectively. The curves I', J', and K' are formed by bending the segments I, J, and K in such a manner that the corners of the pentagon β are rounded. Lines between the three cut-out corners, which are portions forming the sides of pentagon β, form portions of the contour of the cross-sectional shape of the exhaust gas emission corner cell 22c₂.

The cross-sectional area of each of the exhaust gas emission corner cell 22c₁ and the exhaust gas emission corner cell 22c₂ is preferably 40 to 80% of the area of the hexagon α.

Next, the shape of the third exhaust gas introduction cells 21c is described.

In the honeycomb fired body 10, the cross-sectional shape of the third exhaust gas introduction cells 21c may be a square γ congruent to the cross-sectional shape of the first exhaust gas introduction cells 21a, or a shape formed by chamfering two corners adjacent to the outer wall 32 among the corners of the square γ.

When the cross-sectional shape of the third exhaust gas introduction cells 21c is the square γ congruent to the cross-sectional shape of the first exhaust gas introduction cells 21a, it is possible to increase the surface area of each third exhaust gas introduction cell 21c. This results in an increase in the area where PM accumulates, and the pressure loss thus can be maintained at a low level.

When the cross-sectional shape of the third exhaust gas introduction cells 21c is a shape formed by chamfering or rounding two corners adjacent to the outer wall 32 among the corners of the square γ, it is possible to increase the volume of the region around the outer wall to which the third exhaust gas introduction cells 21c are adjacent, and it is possible to further increase the volume of the outermost peripheral region 12 of the honeycomb fired body 10. Thus, it is possible to enhance the above-described effect that is achieved when the volume of the outermost peripheral region 12 of the honeycomb fired body 10 is large.

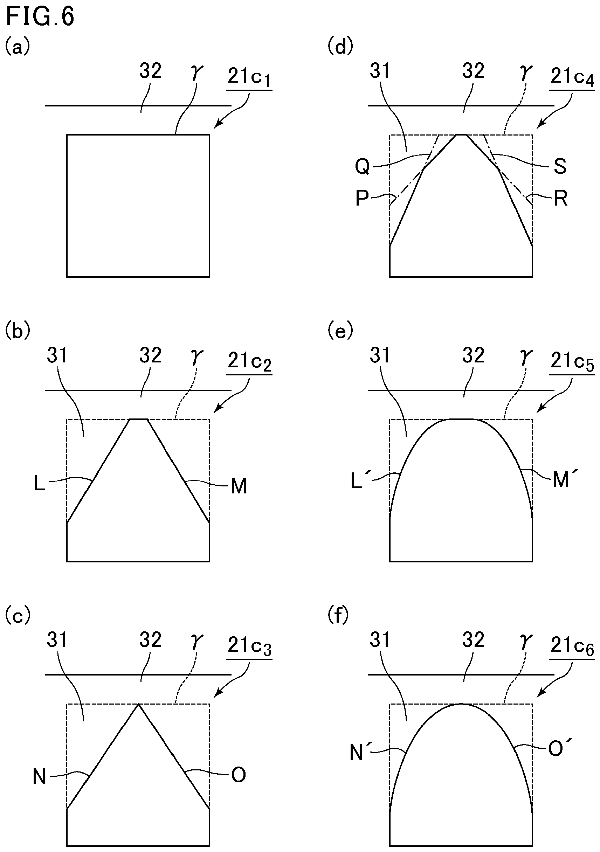

Specifically, the cross-sectional shape of the third exhaust gas introduction cells 21c may be as shown in Figs. 6(a) to 6(f).

Figs. 6(a) to 6(f) are each a schematic cross-sectional view of an example of the cross-sectional shape of the third exhaust gas introduction cells of the honeycomb fired body of the present invention in a plane perpendicular to the longitudinal direction thereof.

As shown in Fig. 6(a), the cross-sectional shape of a third exhaust gas introduction cell 21c₁ is the square γ congruent to the cross-sectional shape of the first exhaust gas introduction cell 21a.

As shown in Fig. 6(b), the cross-sectional shape of a third exhaust gas introduction cell 21c₂ is a hexagonal shape. In this case, among the corners of the square γ, two corners adjacent to the outer wall 32 are cut by two segments L and M, respectively. The segments L and M are not in direct contact with each other. The segments L and M cross each other outside the square γ when extended. A line between the two cut-out corners, which is a portion forming one side of the square γ, forms one side of the hexagon.

As shown in Fig. 6(c), the cross-sectional shape of a third exhaust gas introduction cell 21c₃ is a pentagonal shape. In this case, among the corners of the square γ, two corners adjacent to the outer wall 32 are cut by two segments N and O, respectively. The segment N and the segment O are in contact with each other on one side of the square γ. The segment N and the segment O may cross each other inside the square γ. There is no line as a side of the square γ between the two cut-out corners.

As shown in Fig. 6(d), the cross-sectional shape of a third exhaust gas introduction cell 21c₄ is an octagonal shape. In this case, among the corners of the square γ, one of two corners adjacent to the outer wall 32 is cut by segments P and Q, and the other corner is cut by segments R and S. The segment P and the segment Q cross each other inside the square γ. The segment R and the segment S also cross each other inside the square γ. A line between the two cut-out corners, which is a portion forming one side of the square γ, forms one side of the octagon.

As shown in Fig. 6(e), the cross-sectional shape of a third exhaust gas introduction cell 21c₅ is a shape formed by cutting two corners adjacent to the outer wall 32 among the corners of the square γ by two curves L' and M', respectively. The curves L' and M' are formed by bending the segments L and M in such a manner that the corners of the square γ are rounded. A line between the two cut-out corners, which is a portion forming one side of the square γ, forms a portion of the contour of the cross-sectional shape of the third exhaust gas introduction cell 21c₅.

As shown in Fig. 6(f), the cross-sectional shape of a third exhaust gas introduction cell 21c₆ is a shape formed by cutting two corners adjacent to the outer wall 32 among the corners of the square γ by two curves N' and O'. The curves N' and O' are formed by bending the segments N and O in such a manner that the corners of the square γ are rounded. The curve N' and the curve O' are in contact with each other on one side of the square γ. The curve N' and the curve O' may contact each other inside the square γ.

The cross-sectional area of each of the third exhaust gas introduction cells 21c₂ to 21c₆ is preferably 60 to 80% of the area of the square γ.

Next, the arrangement of the exhaust gas introduction cells 21 and the exhaust gas emission cells 22 is described in detail with reference to the drawings.

As shown in Fig. 3(a), in the honeycomb fired body 10, the exhaust gas emission cells 22 except for the cells adjacent to the outer wall 32 are each adjacently surrounded fully by the exhaust gas introduction cells 21 across the cell partition walls 30, and the exhaust gas introduction cells 21 and the exhaust gas emission cells 22 are alternately arranged in a region adjacent to the outer wall 32.

With the above cell arrangement, the entire cell partition walls 30 surrounding the exhaust gas emission cells 22 can be sufficiently utilized to allow exhaust gas that has flowed into the exhaust gas introduction cells 21 to pass therethrough so as to accumulate PM thereon. In other words, the entire cell partition walls 30 can be widely utilized. This facilitates thin and uniform accumulation of PM on the inner surface of the cell partition walls 30 of the exhaust gas introduction cells 21, and the passage resistance of the PM layer can be reduced. In other words, (d) the passage resistance ΔP₄ upon passage of exhaust gas through PM accumulation layers can be reduced. Thus, the initial pressure loss is low and the increase in pressure loss after the accumulation of PM can be suppressed.

The passage of exhaust gas through the honeycomb fired body 10 is described with reference to the drawings.

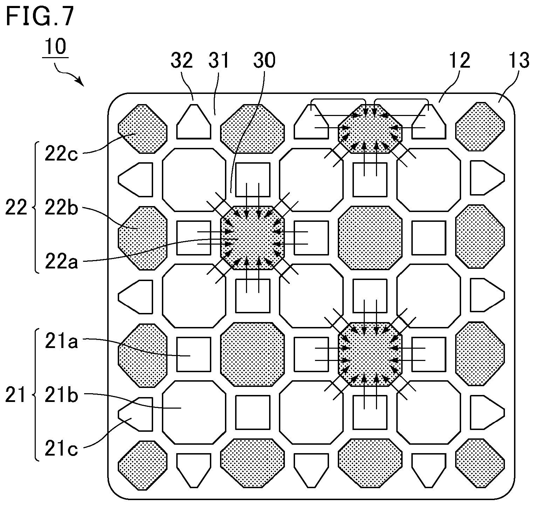

Fig. 7 is a schematic view of the flow of exhaust gas in a cross section of the honeycomb fired body of the present invention in a plane perpendicular to the longitudinal direction thereof, which is shown in Fig. 3(a).

Arrows in Fig. 7 indicate the flow of exhaust gas passing through the cell partition walls 30 or the outer wall 32 of the honeycomb fired body 10.

As shown in Fig. 7, in the honeycomb fired body 10, the cross-sectional area of each second exhaust gas emission cell 22b is larger than the cross-sectional area of each third exhaust gas introduction cell 21c.

In the honeycomb fired body 10 having the above structure, the outflow resistance upon flowing of exhaust gas out of the honeycomb fired body 10, i.e., (f) the outflow resistance ΔP₆ upon flowing of exhaust gas out of the honeycomb fired body 110, can be reduced.

Further, exhaust gas can pass through not only the cell partition walls 30 defining the third exhaust gas introduction cells 21c adjacent to the outer wall 32 but also the outer wall 32 defining the third exhaust gas introduction cells 21c. Thus, in the outermost peripheral region 12 of the honeycomb fired body 10, the entire cell partition walls 30 can be completely utilized for purification of exhaust gas and the outer wall 32 can also be utilized. This facilitates thin and uniform accumulation of PM on the surface of the cell partition walls 30 of the third exhaust gas introduction cells 21 and the surface of the outer wall 32, so that the passage resistance upon passage of exhaust gas through PM accumulation layers can be reduced. In other words, (d) the passage resistance ΔP₄ upon passage of exhaust gas through PM accumulation layers can be reduced.

Thus, it is possible to provide a honeycomb fired body in which the initial pressure loss is low and the increase in pressure loss is suppressed even after the accumulation of PM.

The shape of each cell is not particularly limited as long as the cross-sectional area of each second exhaust gas emission cell 22b is larger than the cross-sectional area of each third exhaust gas introduction cell 21c. Yet, for example, the following shape is preferred.

Specifically, in the honeycomb fired body 10, preferably, the cross-sectional area of each first exhaust gas introduction cell 21a is smaller than the cross-sectional area of each second exhaust gas introduction cell 21b, the cross-sectional area of each exhaust gas emission cell 22 is equal to or larger than the cross-sectional area of each second exhaust gas introduction cell 21b, and in a cross section perpendicular to the longitudinal direction of the cells, the exhaust gas emission cells 22 and the exhaust gas introduction cells 21 are each a polygon, and a side forming the cross-sectional shape of the first exhaust gas introduction cells 21a and facing the exhaust gas emission cell 22 is longer than a side forming the cross-sectional shape of the second exhaust gas introduction cells 21b and facing the exhaust gas emission cell 22.

Further, when the shape of each cell is as shown in Fig. 3(a), each cell partition wall 30 between the first exhaust gas introduction cell 21a and the exhaust gas emission cell 22 has a large passage region (in the case of the cross-sectional shape of a polygonal cell, the sides are long), and exhaust gas can pass through these cell partition walls that are convenient to pass through, and the passage resistance of the cell partition walls 30 can be reduced. In addition, since the cross-sectional area of each exhaust gas emission cell 22 is larger than the cross-sectional area of each first exhaust gas introduction cell 21a, the flow-through resistance of the exhaust gas emission cells 22 can be reduced. In other words, the passage resistance of the cell partition walls 30 and the flow-through resistance of the exhaust gas emission cells 22 can both be reduced, and the initial pressure loss can be reduced.

Next, after the accumulation of a certain amount of PM, the passage resistance of PM accumulation layers on the first exhaust gas introduction cells 21a becomes high at an early point because the cross-sectional area of each first exhaust gas introduction cell 21a is smaller than that of each second exhaust gas introduction cell 21b. This causes switching of the main flow channel of exhaust gas to allow exhaust gas to naturally (voluntarily) flow more into the second exhaust gas introduction cells 21b than into the first exhaust gas introduction cells 21a, allowing PM to accumulate widely and thinly on the second exhaust gas introduction cells 21b each having a larger cross-sectional area. Thus, even after the accumulation of PM, the flow-through resistance of the exhaust gas introduction cells 21 and the passage resistance upon passage of exhaust gas through the PM accumulation layers can be reduced, and the transient pressure loss can be reduced.

The above effect is explained in detail with reference to the drawings.

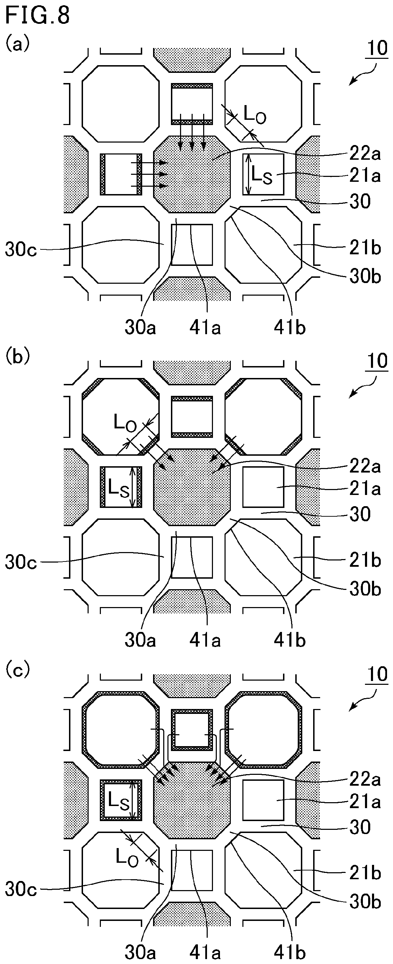

Figs. 8(a) to 8(c) are each an enlarged end face view of an example of a portion of the end face of the honeycomb fired body of the present invention.

As shown in Fig. 8(a), in the honeycomb fired body 10, the first exhaust gas emission cells 22a are each adjacently surrounded fully by the first exhaust gas introduction cells 21a and the second exhaust gas introduction cells 21b across the cell partition walls 30. In each first exhaust gas emission cell 22a, the end on the exhaust gas outlet side is open and the end on the exhaust gas inlet side is plugged. In each first exhaust gas introduction cell 21a and each second exhaust gas introduction cells 21b, the end on the exhaust gas inlet side is open and the end on the exhaust gas outlet side is plugged.

The cross-sectional shape of the first exhaust gas emission cells 22a is an octagon, the cross-sectional shape of the first exhaust gas introduction cells 21a is a square, and the cross-sectional shape of the second exhaust gas introduction cells 21b is an octagon. The cross-sectional area of each second exhaust gas introduction cell 21b is larger than the cross-sectional area of each first exhaust gas introduction cell 21a and is equal to the cross-sectional area of each first exhaust gas emission cell 22a. Thus, the resistance upon passage of exhaust gas through the first exhaust gas emission cells 22a and the resistance upon emission of exhaust gas to the outside of the honeycomb fired body 10 can be suppressed, and the pressure loss can be reduced.

In addition, a side 41a forming the cross-sectional shape of the first exhaust gas introduction cell 21a and facing the exhaust gas emission cell 22a is longer than a side 41b forming the cross-sectional shape of the second exhaust gas introduction cells 21b and facing the exhaust gas emission cell 22a.

Exhaust gas flowing toward the honeycomb fired body 10 flows into the first exhaust gas introduction cells 21a and the second exhaust gas introduction cells 21b in each of which the end on the inlet side is open. The exhaust gas flows sequentially from an easy-to-flow portion in the honeycomb fired body 10 and then flows uniformly in the entire honeycomb fired body 10. In the honeycomb fired body 10, the length (Ls) of the side 41a of each first exhaust gas emission cell 22a is longer than the length (Lo) of the side 41b of each second exhaust gas introduction cell 21b. Thus, the surface area of a cell partition wall 30a separating the first exhaust gas emission cell 22a and the first exhaust gas introduction cell 21a from each other is larger than the surface area of a cell partition wall 30b separating the first exhaust gas emission cell 22a and the second exhaust gas introduction cell 21b from each other. Consequently, the exhaust gas can more easily pass through the cell partition walls 30a, and PM initially accumulates on the surface of the cell partition walls 30a.

As described above, the flow-through resistance of the exhaust gas emission cells and the outflow resistance upon flowing of exhaust gas out of the honeycomb fired body can be reduced simultaneously, so that the initial pressure loss before the accumulation of PM can be reduced.

The relationship between the length of the sides forming the cells and the surface area is concluded as described above based on the following reasons.

The surface area of each cell partition wall 30a separating the first exhaust gas emission cell 22a and the first exhaust gas introduction cell 21a from each other is the surface area of the inner wall of the first exhaust gas introduction cell 21a. The surface area of the inner wall of the first exhaust gas introduction cell 21a can be expressed by Ls × Le, where Le represents the effective length of the honeycomb fired body 10, which is the distance between the exhaust gas inlet end face and the exhaust gas outlet end face excluding the length of the plugs 11 on the inlet side and on the outlet side. Likewise, the surface area of each cell partition wall 30b separating the first exhaust gas emission cell 22a and the second exhaust gas introduction cell 21b from each other is the surface area of the inner wall of the second exhaust gas introduction cell 21b. The surface area of the inner wall of the second exhaust gas introduction cell 21b can be expressed by Lo × Le, where Le represents the effective length of the filter, which is the distance between the exhaust gas inlet end face and the exhaust gas outlet end face excluding the length of the plugs 11 on the inlet side and on the outlet side.

Thus, when the length Ls of the side 41a is longer than the length Lo of the side 41b, the surface area Ls × Le is larger than the surface area Lo × Le. In other words, the length of the side is synonymous with the surface area. Thus, when the length (Ls) of the side 41a of the first exhaust gas emission cell 22a is longer than the length (Lo) of the side 41b of the second exhaust gas introduction cell 21b, the surface area of each cell partition wall 30a separating the first exhaust gas emission cell 22a and the first exhaust gas introduction cell 21a from each other is larger than the surface area of each cell partition wall 30b separating the first exhaust gas emission cell 22a and the second exhaust gas introduction cell 21b from each other.

In Figs. 8(a) to 8(c), information concerning the effects is given only in some portions of these drawings.

Next, as shown in Fig. 8(b), when a certain amount of PM accumulates on the cell partition walls 30a, specifically on the inner wall surface of the first exhaust gas introduction cells 21a, the accumulation of PM is thick because the cross-sectional area of each first exhaust gas introduction cell 21a is small. As a result, the resistance attributable to the accumulation of PM increases, interfering with the passage of exhaust gas through the cell partition walls 30a. In such a situation, as described above, the exhaust gas passes through the cell partition walls 30b each separating the first exhaust gas emission cell 22a and the second exhaust gas introduction cell 21b from each other (switching of the main flow channel), and PM starts accumulating also on the cell partition walls 30b, specifically on the inner wall surface of the second exhaust gas introduction cells 21b.

Next, since the exhaust gas can fairly freely flow inside the cell partition walls, as shown in Fig. 8(c), the exhaust gas flows inside each cell partition wall 30c separating the first exhaust gas introduction cell 21a and the second exhaust gas introduction cell 21b from each other and flows into the first exhaust gas emission cells 22a. In this case, the exhaust gas enters the cell partition wall 30c also from the second exhaust gas introduction cell 21b and the first exhaust gas introduction cell 21a.

As described above, PM accumulates on the cell partition walls 30a and 30c surrounding the first exhaust gas introduction cells 21a, specifically on the entire inner wall surface of the exhaust gas introduction cells 21. Gradually, a larger amount of PM also starts accumulating widely and thinly on the cell partition walls 30b and 30c surrounding the second exhaust gas introduction cells 21b, specifically on the entire inner wall surface of the second exhaust gas introduction cells 21b. Since the cross-sectional area of each first exhaust gas introduction cell 21a is smaller than the cross-sectional area of each second exhaust gas introduction cell 21b, PM accumulates thickly on the first exhaust gas introduction cells 21a, and the flow-through resistance of the PM layer increases. Thus, the exhaust gas that was introduced tends to flow into the second exhaust gas introduction cells 21b, rather than into the first exhaust gas introduction cells 21a at an early point (the above-described switching of the main flow channel for the exhaust gas), causing a transition in the accumulation of PM as described above. Consequently, PM accumulates on the cell partition walls 30b and 30c surrounding the second exhaust gas introduction cells 21b, specifically on the entire inner wall surface of the exhaust gas introduction cells, rather than on the cell partition walls 30a and 30c surrounding the first exhaust gas introduction cells 21a, specifically on the inner wall surface of the exhaust gas introduction cells. Thus, the cell partition walls 30b and 30c surrounding the second exhaust gas introduction cells 21b, specifically the entire inner wall surface of the exhaust gas introduction cells, can be utilized at an early point for the accumulation of PM. In addition, the area of each of the cell partition walls 30b and 30c surrounding the second exhaust gas introduction cells 21b, specifically the area of the inner wall surface of the exhaust gas introduction cells, is larger than the area of each of the cell partition walls 30a and 30c surrounding the first exhaust gas introduction cells 21a, specifically the area of the inner wall surface of the exhaust gas introduction cells. Thus, even after the accumulation of PM on the entire cell partition walls 30b and 30c surrounding the second exhaust gas introduction cells 21b, the PM accumulation layers is sufficiently thin. Thus, the pressure loss increase rate of the exhaust gas is low even after the accumulation of PM. This results in an extremely excellent effect, i.e., the pressure loss can be maintained at a low level regardless of an increase in the amount of accumulated PM.

As a result, in a vehicle equipped with a honeycomb filter including the honeycomb fired body 10, problems in driving due to the increase in pressure loss are less likely to occur throughout the period of use, and good fuel economy can be achieved.

The honeycomb fired body 10 is preferably formed of SiC. SiC is a material having excellent heat resistance. Thus, the honeycomb fired body 10 has excellent heat resistance.

In the honeycomb fired body 10, the cell density is preferably in the range of 15.5 to 62 pcs/cm² (100 to 400 cpsi).

In the honeycomb fired body 10, the thickness of the cell partition walls 30 is preferably 0.210 mm or less, more preferably 0.075 to 0.160 mm.

The cell partition walls 30 having a thickness of 0.210 mm or less are sufficiently thin so that the pressure loss in the initial state where PM has not accumulated is sufficiently low. The increase in pressure loss after the accumulation of PM can also be suppressed.

The cell partition walls 30 having a thickness of more than 0.210 mm are so thick that the resistance upon passage of exhaust gas through the cell partition walls 30 is high, resulting in an increased pressure loss.

In the honeycomb fired body 10, the porosity of the cell partition walls 30 is preferably 40 to 65%.

The cell partition walls 30 having a porosity of 40 to 65% can successfully capture PM in exhaust gas, and the increase in pressure loss attributable to the cell partition walls 30 can be suppressed. Thus, the honeycomb fired body 10 in which the initial pressure loss is low and the increase in pressure loss is suppressed even after the accumulation of PM can be provided.

When the porosity of the cell partition walls 30 is less than 40%, the percentage of pores in the cell partition walls 30 is so low that exhaust gas cannot easily pass through the cell partition walls 30, resulting in an increased pressure loss upon passage of exhaust gas through the cell partition walls 30. In contrast, the cell partition walls 30 having a porosity of more than 65% have a low mechanical strength, and cracks are easily formed during regeneration or the like.

In the honeycomb fired body 10, the average pore diameter of pores in the cell partition walls 30 is preferably 8 to 25 µm.

The honeycomb fired body 10 having the above structure can capture PM with high capturing efficiency while the increase in pressure loss is suppressed.

When the average pore diameter of pores in the cell partition walls 30 is less than 8 µm, the pores are so small that the pressure loss upon passage of exhaust gas through the cell partition walls 30 is high. In contrast, when the average pore diameter of pores in the cell partition walls 30 is more than 25 µm, the pore diameter is so large that the PM capturing efficiency is reduced.

The porosity and the average pore diameter can be determined by mercury porosimetry.

In the honeycomb fired body 10, the thickness of the outer wall 32 is not particularly limited, but the minimum thickness of the outer wall 32 is preferably 1.5 to 3 times, more preferably 2 to 3 times the thickness of the cell partition walls 30.

When the minimum thickness of the outer wall 32 is 1.5 to 3 times the thickness of the cell partition walls 30, although the cell partition walls 30 are thin, the outer wall 32 is sufficiently thick so that the honeycomb fired body 10 is sufficiently strong against external shock or the like. In addition, since the outer wall 32 of the honeycomb fired body 10 is thick, it is possible to prevent a situation where the heat capacity is small which is associated with making the cell partition walls 30 thinner.

In the honeycomb fired body 10, the porosity of the outer wall 32 is preferably 40 to 65%.

The porosity of the outer wall 32 is preferably in the above range for the same reason as to why the porosity of the cell partition walls 30 is preferably in the above range.

In the honeycomb fired body 10, the average pore diameter of pores in the outer wall 32 is preferably 8 to 25 µm.

The average pore diameter of pores in the outer wall 32 is preferably in the above range for the same reason as to why the average pore diameter of the pores in the cell partition walls 30 is in the above range.

As shown in Fig. 3(a), the cross-sectional shape of the honeycomb fired body 10 in a plane perpendicular to the longitudinal direction of the honeycomb fired body 10 is preferably a square, more preferably a square with a side length of 30 to 45 mm.

The honeycomb fired body 10 of such size offers excellent handleability.

The honeycomb fired body 10 may carry a catalyst for purifying exhaust gas. Preferred examples of catalysts to be carried are noble metals such as platinum, palladium, and rhodium. Platinum is more preferred among these. Examples of other catalysts include alkali metals such as potassium and sodium, and alkaline-earth metals such as barium. These catalysts may be used alone or in combination of two or more thereof.

The presence of these catalysts facilitates removal of PM by combustion and enables purification of toxic exhaust gas.

Next, the honeycomb filter of the present invention is described with reference to the drawings.

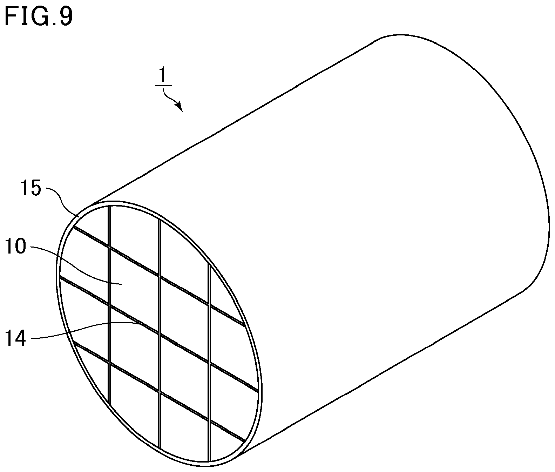

Fig. 9 is a schematic perspective view of an example of the honeycomb filter of the present invention.

As shown in Fig. 9, a honeycomb filter 1, which is an example of the honeycomb filter of the present invention, is a round pillar-shaped honeycomb filter formed by combining the honeycomb fired bodies 10 with one another with the adhesive layer 14 therebetween.

The honeycomb filter 1 includes the honeycomb fired bodies 10 providing the above effects. Thus, the pressure loss in the initial state where PM has not accumulated is sufficiently low, the strength is sufficiently high, and the heat capacity is not small.

In the honeycomb filter 1, the adhesive layer 14 is obtained by applying an adhesive paste containing an inorganic binder and inorganic particles and drying the adhesive paste. The adhesive paste may further contain inorganic fibers and/or whiskers.

The honeycomb filter 1 may optionally have a peripheral coat layer 15 formed on the periphery thereof to prevent leakage of exhaust gas. The peripheral coat layer 15 is preferably formed of the same material as that of the adhesive paste.

The honeycomb filter 1 is preferably for use in purifying exhaust gas from gasoline engines.

As described above, in the honeycomb filter 1, the pressure loss in the initial state where PM has not accumulated is sufficiently low, the strength is sufficiently high, and the heat capacity is not small. Thus, the honeycomb filter 1 can be suitably used to purify exhaust gas from gasoline engines.

An exhaust gas purification device including the honeycomb filter 1 is described with reference to the drawings.

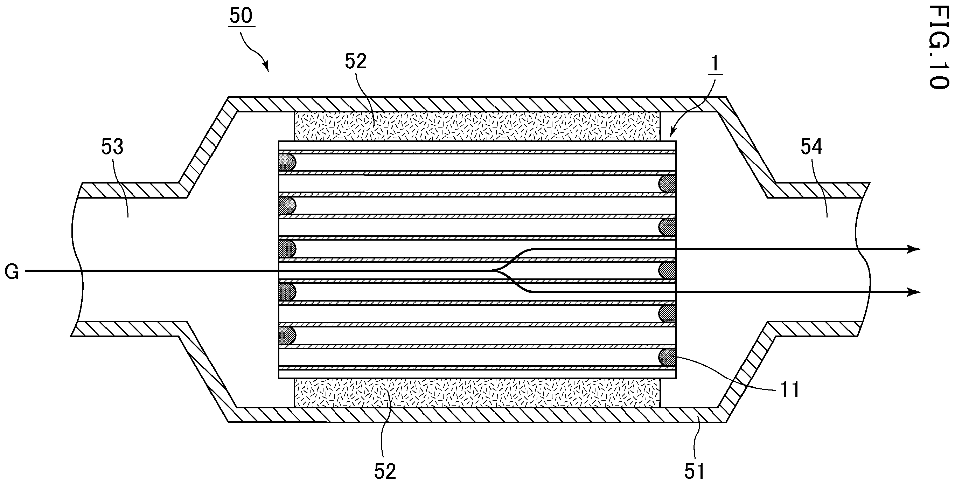

Fig. 10 is a schematic cross-sectional view of an example of an exhaust gas purification device including the honeycomb filter of the present invention therein.

An exhaust gas purification device 50 shown in Fig. 10 includes the honeycomb filter 1, a metal casing 51 that externally covers the honeycomb filter 1, and a holding seal material 52 arranged between the honeycomb filter 1 and the metal casing 51. An inlet tube 53 connected to an internal combustion engine such as an engine is connected to the metal casing 51 at one end where exhaust gas is introduced. An outlet tube 54 connected to the outside is connected to the metal casing 51 at the other end.

Exhaust gas emitted from an internal combustion engine flows into the exhaust gas purification device 50 (in Fig. 10, exhaust gas is indicated by G, and the flow of the exhaust gas is indicated by arrows) and reaches the honeycomb fired body 10 constituting the honeycomb filter 1 and is purified by the honeycomb fired body 10. The mechanism for purification of exhaust gas by the honeycomb fired body 10 is as described above, and thus, the explanation is omitted. Purified exhaust gas flows out of the honeycomb fired body 10 and is emitted to the outside.

In the exhaust gas purification device 50, the holding seal material 52 is preferably a mat made of inorganic fibers. The mat is preferably a needle mat obtained by a needling treatment

The inorganic fibers may be alumina fibers, alumina-silica fibers, silica fibers, or biosoluble fibers.

The needling treatment is a process in which a fiber entangling means such as a needle is pushed in and out of a base mat. In the holding seal material 52, preferably, inorganic fibers having a relatively long average fiber length are three-dimensionally entangled with each other by the needling treatment.

The average fiber length of inorganic fibers is long to a certain extent, for example, preferably about 50 µm to 100 mm, to form the entanglement structure.

The average fiber diameter of inorganic fibers of the mat to form the holding seal material 52 is preferably 1 to 20 µm, more preferably 3 to 10 µm.

The inorganic fibers having an average fiber diameter of 1 to 20 µm have sufficiently high strength and flexibility and thus can improve the shear strength of the holding seal material 52.

The inorganic fibers having an average fiber diameter of less than 1 µm are thin and easily broken and thus have insufficient tensile strength. In contrast, the inorganic fibers having an average fiber diameter of more than 20 µm are not easily bent and thus have insufficient flexibility.

The basis weight (weight per unit area) of the mat to form the holding seal material 52 is not particularly limited, but it is preferably 200 to 4000 g/m², more preferably 1000 to 3000 g/m². The mat having a basis weight of less than 200 g/m² has an insufficient holding force. Thus, the honeycomb filter 1 will easily fall out when the holding seal material 52 formed of such a mat is used to produce the exhaust gas purification device 50.

The mat having a basis weight of more than 4000 g/m² cannot be easily reduced in its bulkiness.

The bulk density of the mat to form the holding seal material 52 (the bulk density of the holding seal material before wrapping) is not particularly limited, but it is preferably 0.10 to 0.30 g/cm³. When the bulk density of the mat is less than 0.10 g/cm³, the inorganic fibers are weakly entangled and are easily separated, making it difficult to maintain the predetermined shape of the mat.

When the bulk density of each mat is more than 0.30 g/cm³, the mat to form the holding seal material 52 is inflexible. Thus, the holding seal material 52 is poorly wrapped around the honeycomb filter 1 and is easily breakable.

The mat to form the holding seal material 52 may further contain a binder such as an organic binder to reduce the bulkiness or to improve the workability before assembling the exhaust gas purification device 50.

The thickness of the mat to form the holding seal material 52 is preferably 1.5 to 15 mm.

In the exhaust gas purification device 50, the metal casing 51 is preferably mainly made of metal such as stainless steel.

Next, an example of the method for producing the honeycomb fired body of the present invention and an example of the method for producing the honeycomb filter of the present invention are described.

### (1) Method for producing honeycomb fired body

### (1-1) Ceramic raw material preparing step

First, a ceramic raw material as a raw material of the honeycomb fired body is prepared. The ceramic raw material can be prepared by mixing silicon carbide powder, an organic binder, a plasticizer, a lubricant, and water.

The ceramic raw material may optionally contain a pore-forming agent such as balloons that are fine hollow spheres formed of oxide-based ceramic, spherical acrylic particles, or graphite.

Any balloons may be used. Examples thereof include alumina balloon, glass microballoon, shirasu balloon, fly ash balloon (FA balloon), and mullite balloon. Alumina balloon is preferred among these.

### (1-2) Extruding step

Next, the ceramic raw material prepared in the ceramic raw material preparing step is extruded, and the extrudate is cut in a predetermined length to produce honeycomb molded bodies. At this point, honeycomb molded bodies are produced using a die that forms a honeycomb molded body having a cell structure (shape and arrangement of the cells) shown in Fig. 3(a) and 3(b), Figs. 4(a) to 4(e), Figs. 5(a) and 5(b), and Figs. 6(a) to 6(f) on the cross section.

The thickness of the cell partition walls, the thickness of the outer wall, and the ratio between the cross-sectional area of each peripheral cell in a plane perpendicular to the longitudinal direction thereof and the cross-sectional area of each inner cell in a plane perpendicular to the longitudinal direction thereof can be adjusted by adjusting the shape of the die.

Especially when adjusting the ratio between the cross-sectional area of each peripheral cell in a plane perpendicular to the longitudinal direction thereof and the cross-sectional area of each inner cell in a plane perpendicular to the longitudinal direction thereof, the ratio can be adjusted by adjusting the chamfering or rounding range (angle and position).

### (1-3) Drying step

Next, each honeycomb molded body obtained in the extruding step is dried using a dryer such as a microwave dryer, a hot air dryer, a dielectric dryer, a reduced pressure dryer, a vacuum dryer, or a freeze dryer. The honeycomb molded body may be dried using a microwave dryer and a hot air dryer concurrently. Alternatively, the honeycomb molded body may be dried using a microwave dryer until the moisture content is reduced to a certain extent and subsequently using a hot air dryer to completely remove the moisture content in the honeycomb molded body.

### (1-4) Plugging step

In the plugging step, a plug material paste to serve as a plug is placed in predetermined cells of the dried honeycomb molded body to plug the cells.

The plug material paste may be the ceramic raw material.

### (1-5) Degreasing step

Next, the plugged honeycomb molded body is heated at 300°C to 650°C for 0.5 to 3 hours to remove organic substances in the honeycomb molded body, whereby a degreased honeycomb body is produced.

### (1-6) Firing step

The degreased honeycomb body obtained in the degreasing step is fired at 1800°C to 2200°C for 0.5 to 4 hours in an inert gas atmosphere such as nitrogen or argon atmosphere.

The plug material paste placed at one end of each cell is fired by heating into a plug.

The honeycomb fired body of the present invention can be produced through the above steps.

Next, the method for producing the honeycomb filter of the present invention is described.

### (2) Method for producing honeycomb filter

### (2-1) Adhesive paste preparing step

First, an adhesive paste to combine the honeycomb fired bodies is produced.

The adhesive paste contains, for example, an inorganic binder, an organic binder, and inorganic particles. The adhesive paste may further contain inorganic fibers and/or whiskers.

Examples of the inorganic particles contained in the adhesive paste include carbide particles and nitride particles. Specific examples thereof include silicon carbide particles, silicon nitride particles, and boron nitride particles. These may be used alone or in combination of two or more thereof. The inorganic particles are preferably silicon carbide particles having excellent thermal conductivity.

Examples of the inorganic fibers and/or whiskers contained in the adhesive paste include inorganic fibers and/or whiskers made of silica-alumina, mullite, alumina, silica, or the like. These may be used alone or in combination of two or more thereof. The inorganic fibers are preferably alumina fibers. Alternatively, the inorganic fibers may be biosoluble fibers.

Further, the adhesive paste may optionally contain a pore-forming agent such as balloons that are fine hollow spheres formed of oxide-based ceramic, spherical acrylic particles, or graphite. Any balloons may be used. Examples thereof include alumina balloon, glass microballoon, shirasu balloon, fly ash balloon (FA balloon), and mullite balloon.

### (2-2) Assembling step

The adhesive paste produced in the above step is applied to the lateral sides of each honeycomb fired body to assemble a plurality of honeycomb fired bodies.

Subsequently, the assembled honeycomb fired bodies are heated, whereby the adhesive paste is solidified by heating into an adhesive layer, and an aggregate of the honeycomb fired bodies is produced.

Next, the aggregate of the honeycomb fired bodies is cut with a tool such as a diamond cutter into a round pillar shape.

### (2-3) Peripheral coat layer forming step

Next, a peripheral coat material paste is applied to the periphery of the aggregate of the honeycomb fired bodies obtained in the assembling step, and the peripheral coat material paste is solidified by drying to form a peripheral coat layer.

The peripheral coat material paste may be the adhesive paste described above. Alternatively, the peripheral coat material may be a paste having a composition different from the adhesive paste.

The peripheral coat layer is optional and is not essential.

The honeycomb filter of the present invention can be produced through the above steps.

### EXAMPLES

Examples that more specifically disclose embodiments of the present invention are described below, but the present invention is not limited to these examples.

### (Example 1-1)

### (1) Production of honeycomb fired body

### (1-1) Ceramic raw material preparing step

A mixture was obtained by mixing 52.8% by weight of silicon carbide coarse powder having an average particle size of 22 µm, 22.6% by weight of silicon carbide fine powder having an average particle size of 0.5 µm. To the mixture were added 4.6% by weight of an organic binder (methylcellulose), 0.8% by weight of a lubricant (UNILUB available from NOF Corporation), 1.3% by weight of glycerin, 1.9% by weight of a pore-forming agent (acrylic resin), 2.8% by weight of oleic acid, and 13.2% by weight of water.

Thus, a ceramic raw material was prepared.

### (1-2) Extruding step

Next, the ceramic raw material prepared in the ceramic raw material preparing step was extruded into a honeycomb molded body as a precursor of the honeycomb fired body 10.

The shape and size of the cells were as follows.

The first exhaust gas emission cells 22a were each an octagon in which four short sides with a length of 0.566 mm and four long sides with a length of 1.300 mm were alternately arranged.

All the angles formed by the short side and the long side were 135°.

The shape of the second exhaust gas emission cells 22b was as shown in Fig. 4(a).

More specifically, the hexagon α in Fig. 4(a) is a shape formed by sequentially arranging a 2.100-mm side, a 1.300 mm-side, a 0.566 mm-side, a 1.300 mm-side, a 0.566 mm-side, and a 1.300 mm-side in the form of a hexagon. The angle formed by the 2.100 mm-side and the 1.300 mm-side was 90°, and the angle formed by the 1.300 mm-side and the 0.566 mm-side was 135°.

The shape of the second exhaust gas emission cells 22b was formed by chamfering two corners formed by the 2.100 mm-side and the two 1.300 mm-sides of the hexagon α. Its cross-sectional area was 65% of the area of the hexagon α.

The shape of the exhaust gas emission corner cells 22c was as shown in Fig. 5(a). Its cross-sectional area was 45% of the area of the hexagon α.

The first exhaust gas introduction cells 21a were each a square with a side length of 1.300 mm.

The second exhaust gas introduction cells 21b were each an octagon in which four short sides with a length of 0.566 mm and four long sides with a length of 1.300 mm were alternately arranged.

All the angles formed by the short side and the long side were 135°.

The shape of the third exhaust gas introduction cells 21c was as shown in Fig. 6(b), and its cross-sectional area was 60% of the cross-sectional area of the first exhaust gas emission cells 22a.

### (1-3) Drying step

Next, the raw honeycomb molded body was dried using a microwave dryer to produce a dried honeycomb molded body.

### (1-4) Plugging step

Subsequently, the cells of the honeycomb molded body were plugged by placing a plug material paste in predetermined cells.

Specifically, the cells were plugged at the end on the exhaust gas inlet side and at the end on the exhaust gas outlet side at positions shown in Fig. 2.

### (1-5) Degreasing step

Subsequently, the dried honeycomb molded body with the plugged cells was subjected to a degreasing treatment at 400°C for 2 hours. Thus, a degreased honeycomb body was produced.

### (1-6) Firing step

Further, the degreased honeycomb body was subjected to a firing treatment at 2200°C in an argon atmosphere under normal pressure for 2 hours and 40 minutes.

A honeycomb fired body according to Example 1-1 was produced through the above steps.

In the produced honeycomb fired body according to Example 1-1, the porosity was 45%, the average pore diameter was 15 µm, the size was 34.3 mm × 34.3 mm × 150 mm, the cell density was 31 pcs/cm² (200 cpsi), the thickness of the cell partition walls was 0.203 mm, and the minimum thickness of the outer wall was 0.322 mm.

### (Comparative Example 1-1)

A honeycomb fired body according to Comparative Example 1-1 was produced in the same manner as in Example 1-1, except that in the "(1-2) Extruding step", none of the corners of the cross-sectional shapes of the second exhaust gas emission cells 22b, the exhaust gas emission corner cells 22c, and the third exhaust gas introduction cells 21c were chamfered or rounded.

### (Comparative Example 1-2)

A honeycomb fired body according to Comparative Example 1-2 was produced in the same manner as in Comparative Example 1-1, except that in the "(1-2) Extruding step", none of the corners of the cross-sectional shapes of the second exhaust gas emission cells 22b, the exhaust gas emission corner cells 22c, and the third exhaust gas introduction cells 21c were chamfered or rounded; and in the produced honeycomb fired body, the thickness of the cell partition walls was 0.250 mm, and the minimum thickness of the outer wall was 0.322 mm.

### (Evaluation of compressive stress)

### (1) Simulation of compressive stress

For the honeycomb fired bodies according to Example 1-1, Comparative Example 1-1, and Comparative Example 1-2, the compressive stress generated inside the honeycomb fired body by peripherally applied pressure was calculated by simulation.

Simulation conditions were as follows.
- Software used: ANSYS Mechanical APDL version 14.0
- Calculation model: 2D plane, 1/8 symmetrical model
- Physical properties

SiC base (Young's modulus: 15.12 Gpa; Poisson's ratio: 0.33)

Adhesive layer (Young's modulus: 0.40 Gpa; Poisson's ratio: 0.20)

### • Pressure loading: 1.5 MPa (uniformly distributed load)

### (2) Calculation of relative strength

Next, in the simulation, the relative strength of the honeycomb fired bodies of Example 1-1 and Comparative Example 1-1 was calculated, taking the maximum compressive stress of the honeycomb fired body of Comparative Example 1-2 as 1.00.

The relative strength can be determined from the following formula 1.

### Relative strength = Maximum compressive stress of Example 1-1 or Comparative Example 1-1 /Maximum compressive stress of Comparative Example 1-2 Formula 1

Table 1 shows the results.

**[Table 1]**

| | Relative strength |
|---|---|
| Example 1-1 | 1.09 |
| Comparative Example 1-1 | 0.81 |
| Comparative Example 1-2 | 1.00 |

As shown in Table 1, in Example 1-1 in which the corners of the cross-sectional shapes of the second exhaust gas emission cells 22b, the exhaust gas emission corner cells 22c, and the third exhaust gas introduction cells 21c were chamfered or rounded, the honeycomb fired body exhibited a higher strength against compressive stress even though the cell partition walls were thin.

### (Example 2-1)

A honeycomb filter was produced by the following method.

### (1) Preparation of honeycomb fired bodies

Sixteen honeycomb fired bodies according to Example 1-1 was prepared as honeycomb fired bodies for a honeycomb filter.

### (2-1) Adhesive paste preparing step

A heat resistant adhesive paste was prepared by mixing 30% by weight of alumina fibers having an average fiber length of 20 µm, 21% by weight of silicon carbide particles having an average particle size of 0.6 µm, 15% by weight of silica sol, 5.6% by weight of carboxymethyl cellulose, and 28.4% by weight of water.

### (2-2) Assembling step

The adhesive paste was applied to the lateral sides of each prepared honeycomb fired body to assemble the honeycomb fired bodies.

Subsequently, the assembled honeycomb fired bodies were heated at 120°C, whereby the adhesive paste was solidified by heating into an adhesive layer, and an aggregate of the honeycomb fired bodies was produced.

Next, the aggregate of the honeycomb fired bodies was cut with a diamond cutter into a round pillar shape.

### (2-3) Peripheral coat layer forming step

Next, a peripheral coat material paste having the same composition as the adhesive paste was applied to the peripheral side of the honeycomb fired body aggregate, and the peripheral coat material paste was solidified by drying at 120°C to form a peripheral coat layer. Thus, a honeycomb filter was produced.

The honeycomb filter according to Example 2-1 was produced through the above steps.

### (Comparative Example 2-1)

A honeycomb filter according to Comparative Example 2-1 was produced in the same manner as in Example 2-1, except that the honeycomb fired bodies according to Comparative Example 1-1 was used.

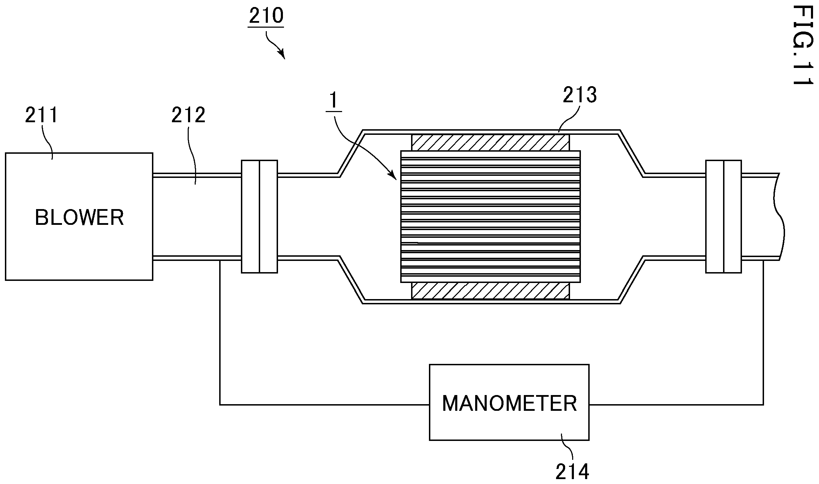

The initial pressure loss in the honeycomb filters according to Example 2-1 and Comparative Example 2-1 was measured using an initial pressure loss measuring device as shown in Fig. 11.

### (Measurement of initial pressure loss)

Fig. 11 is a schematic explanatory view of an initial pressure loss measuring device.

An initial pressure loss measuring device 210 includes a blower 211, an exhaust gas pipe 212 connected to the blower 211, a metal casing 213 fixedly containing the honeycomb filter 1 therein, and a manometer 214 whose tubes are arranged in such a manner to allow detection of the pressure of gas before and after flowing through the honeycomb filter 1. In other words, with the initial pressure loss measuring device 210, the pressure loss is measured by circulating gas in the honeycomb filter 1 and measuring the pressure of the gas before and after the gas flows through the honeycomb filter 1.

The blower 211 was operated three times at a gas flow rate of 300 m³/h, 450 m³/h, and 600 m³/h, and the pressure loss five minutes after the start of the operation was measured. Table 2 shows the results.

**[Table 2]**

| | Measurement flow rate (m³/h) | Initial pressure loss (kPa) |
|---|---|---|
| Example 2-1 | 300 | 1.35 |
| | 450 | 2.80 |
| | 600 | 4.45 |
| Comparative Example 2-1 | 300 | 1.40 |
| | 450 | 2.70 |
| | 600 | 4.30 |

A comparison between the honeycomb filter according to Example 2-1 and the honeycomb filter according to Comparative Example 2-1 shows that the initial pressure loss is comparable and the initial pressure loss is not high.

The above results show that the honeycomb fired body according to Example 1-1 has high strength against compressive stress.

In addition, the above results show that the initial pressure loss is not high in the honeycomb filter according to Example 2-1 including the honeycomb fired bodies according to Example 1-1.

### REFERENCE SIGNS LIST

1 honeycomb filter
10 honeycomb fired body
11 plug
12 outermost peripheral region
13 corner
14 adhesive layer
15 peripheral coat layer
20 cell
21 exhaust gas introduction cell
21a first exhaust gas introduction cell
21b second exhaust gas introduction cell
21c, 21c₁, 21c₂, 21c₃, 21c₄, 21c₅, 21c₆ third exhaust gas introduction cell
22 exhaust gas emission cell
22a first exhaust gas emission cell
22b, 22b₁, 22b₂, 22b₃, 22b₄, 22b₅ second exhaust gas emission cell
22c, 22c₁, 22c₂ exhaust gas emission corner cell
30 cell partition wall
31 thick wall region
32 outer wall
50 exhaust gas purification device
51 metal casing
52 holding sealing material

## Claims

1. A honeycomb fired body comprising:
a plurality of cells that serve as channels of exhaust gas;
porous cell partition walls defining the cells; and
an outer wall formed at a periphery thereof,
the cells including exhaust gas introduction cells in each of which an end on an exhaust gas inlet side is open and an end on an exhaust gas outlet side is plugged, and exhaust gas emission cells in each of which an end on the exhaust gas outlet side is open and an end at the exhaust gas inlet side is plugged,
wherein the cross-sectional shape of the exhaust gas introduction cells in a plane perpendicular to the longitudinal direction thereof is constant from the end on the exhaust gas inlet side to the end on the exhaust gas outlet side except for the plugged portion,
the cross-sectional shape of the exhaust gas emission cells in a plane perpendicular to the longitudinal direction thereof is constant from the end on the exhaust gas inlet side to the end on the exhaust gas outlet side except for the plugged portion,
the exhaust gas emission cells except for the cells adjacent to the outer wall are each adjacently surrounded fully by the exhaust gas introduction cells across the cell partition walls,
the exhaust gas introduction cells and the exhaust gas emission cells are alternately arranged in a region adjacent to the outer wall,
the cross-sectional area of each exhaust gas emission cell located in the region adjacent to the outer wall in a plane perpendicular to the longitudinal direction thereof is larger than the cross-sectional area of each exhaust gas introduction cell located in the region adjacent to the outer wall in a plane perpendicular to the longitudinal direction thereof, and
the cell partition walls in contact with the outer wall each have a thick wall region where the wall thickness gradually increases toward the outer wall.

2. The honeycomb fired body according to claim 1,
wherein the exhaust gas introduction cells comprise first exhaust gas introduction cells not adjacent to the outer wall and second exhaust gas introduction cells not adjacent to the outer wall and third exhaust gas introduction cells adjacent to the outer wall,
the cross-sectional area of each first exhaust gas introduction cell in a plane perpendicular to the longitudinal direction thereof is smaller than the cross-sectional area of each second exhaust gas introduction cell in a plane perpendicular to the longitudinal direction thereof,
the exhaust gas emission cells comprise first exhaust gas emission cells not adjacent to the outer wall and second exhaust gas emission cells adjacent to the outer wall,
the cross-sectional area of each first exhaust gas emission cell in a plane perpendicular to the longitudinal direction thereof is equal to or larger than the cross-sectional area of each second exhaust gas introduction cell in a plane perpendicular to the longitudinal direction thereof, and
in a cross section perpendicular to the longitudinal direction of the cells, the exhaust gas emission cells and the exhaust gas introduction cells are each a polygon, and a side forming the cross-sectional shape of the first exhaust gas introduction cells and facing the exhaust gas emission cell is longer than a side forming the cross-sectional shape of the second exhaust gas introduction cells and facing the exhaust gas emission cell.

3. The honeycomb fired body according to claim 2,
wherein the cross-sectional shape of the first exhaust gas emission cells in a plane perpendicular to the longitudinal direction thereof is an octagon,
the cross-sectional shape of the first exhaust gas introduction cells in a plane perpendicular to the longitudinal direction thereof is a square, and
the cross-sectional shape of the second exhaust gas introduction cells in a plane perpendicular to the longitudinal direction thereof is an octagon.

4. The honeycomb fired body according to claim 3,
wherein the cross-sectional shape of the second exhaust gas emission cells in a plane perpendicular to the longitudinal direction thereof is a shape formed by cutting a portion of the octagonal cross-sectional shape of the first exhaust gas emission cells in a plane perpendicular to the longitudinal direction by a straight line so as to form a hexagon and then chamfering or rounding two corners adjacent to the outer wall among the corners of the hexagon.

5. The honeycomb fired body according to claim 3 or 4,
wherein the cross-sectional shape of the third exhaust gas introduction cells in a plane perpendicular to the longitudinal direction thereof is a square congruent to the cross-sectional shape of the first exhaust gas introduction cells in a plane perpendicular to the longitudinal direction thereof.

6. The honeycomb fired body according to claim 3 or 4,
wherein the cross-sectional shape of the third exhaust gas introduction cells in a plane perpendicular to the longitudinal direction thereof is a shape formed by chamfering or rounding two corners adjacent to the outer wall among the corners of the square cross-sectional shape of the first exhaust gas introduction cells in a plane perpendicular to the longitudinal direction thereof.

7. The honeycomb fired body according to any one of claims 1 to 6,
wherein the honeycomb fired body is formed of SiC.

8. The honeycomb fired body according to any one of claims 1 to 7,
wherein the thickness of the cell partition walls is 0.210 mm or less.

9. The honeycomb fired body according to any one of claims 1 to 8,
wherein the minimum thickness of the outer wall is 1.5 to 3 times the thickness of the cell partition walls.

10. A honeycomb filter comprising:
a plurality of the honeycomb fired bodies according to any one of claims 1 to 9; and
an adhesive layer combining the plurality of the honeycomb fired bodies with one another.

11. The honeycomb filter according to claim 10 for use in purifying exhaust gas from a gasoline engine.
